# EUROPÄISCHE PATENTSCHRIFT

(11) **EP 0 919 353 B1**
(45) Veröffentlichungstag und Bekanntmachung des Hinweises auf die Patenterteilung: **04.08.2004**
(21) Anmeldenummer: 98122267.2
(22) Anmeldetag: 24.11.1998
(51) Int. Cl.: B29C 47/68

(54) **Vorrichtung zum Filtrieren eines Fluidstromes sowie Filtermodul zur Verwendung in einer entsprechenden Vorrichtung**
Filter apparatus for a fluid stream and filter module for use in such an apparatus
Appareil de filtration d'un courant de fluide et un module de filtration à utiliser avec ledit appareil

(30) Priorität: 27.11.1997 DE 19752590
(43) Veröffentlichungstag der Anmeldung: 02.06.1999
(73) Patentinhaber: Maag Pump Systems Textron GmbH, 34131 Kassel (DE)
(72) Erfinder: Hangmann, Manfred, 48268 Greven (DE)
(74) Vertreter: Lau-Loskill, Philipp, Dipl.-Phys.

(56) Entgegenhaltungen:
- US-A- 4 701 118
- US-A- 4 973 406
- PATENT ABSTRACTS OF JAPAN vol. 006, no. 232 (M-172), 18. November 1982 (1982-11-18) & JP 57 133039 A (ISHIKAWAJIMA HARIMA JUKOGYO KK), 17. August 1982 (1982-08-17)

## Beschreibung

Die vorliegende Erfindung betrifft eine Vorrichtung zum Filtrieren eines Fluidstromes mit den Merkmalen des Oberbegriffs des Patentanspruchs 1 sowie in Filtermodul zur Verwendung in einer derartigen Vorrichtung.

Um Fluidströme, insbesondere Kunststoffschmelzen, vor deren Verarbeitung zu reinigen, ist es bekannt, die in den Fluidströmen, insbesondere in den Kunststoffschmelzen, enthaltenen Fremdpartikel durch ein entsprechendes Filtrieren zu entfernen.

Um dieses Filtrieren des Fluidstromes und insbesondere der Kunststoffschmelze kontinuierlich zu gestalten, ist es seit langem bekannt, hier eine Vorrichtung zum Filtrieren vorzusehen, die von dem diesbezüglichen Fluidstrom und insbesondere von der Kunststoffschmelze durchströmt wird. Hierbei wird diese Filtriervorrichtung, sofern sie zum Filtrieren von Kunststoffschmelzen angewendet wird, stromab eines Extruders und stromauf eines entsprechenden Werkzeuges oder einer entsprechenden Düse angeordnet.

So beschreibt beispielsweise die DE-AS 15 54 913 eine entsprechende Filtriervorrichtung für Strangpressen und Spritzgußmaschinen, wobei die bekannte Vorrichtung ein Gehäuse aufweist, das mit einem von der jeweils zu filtrierenden Kunststoffschmelze durchströmten Fluidteilkanal versehen ist. Senkrecht zur Strömungsrichtung des Fluids in dem Teilkanal erstreckt sich bei der bekannten Vorrichtung ein Bolzen, der entsprechende Filter haltert, derart, daß die Filter senkrecht zur Strömungsrichtung der Kunststoffschmelze in dem Teilkanal angeordnet sind. Durch eine axiale Verschiebung des Bolzens relativ zur Strömungsrichtung der Kunststoffschmelze ist es dann möglich, das mit Fremdpartikeln beladene und somit beschmutzte Filter außerhalb des Gehäuses anzuordnen, so daß dementsprechend dieses Filter gereinigt oder ausgetauscht werden kann. Um in diesem Reinigungszustand das Filtrieren der Kunststoffschmelze nicht zu unterbrechen, weist der diesbezügliche Bolzen eine Reihe von weiteren Filtern auf, die mit axialem Abstand voneinander im Bolzen gelagert sind. Bei der zuvor genannten Reinigungsoperation tritt dann ein entsprechend anderes Filter, das vom selben Bolzen gehaltert wird, in Eingriff mit der Kunststoffschmelze, so daß dann durch dieses andere Filter diese Kunststoffschmelze filtriert wird.

Eine Vorrichtung zum Filtrieren eines Fluidstromes, insbesondere zum Filtrieren einer Kunststoffschmelze, mit den Merkmalen des Oberbegriffs des Patentanspruchs 1 ist aus der DE 195 19 519 bekannt. Hierbei weist die bekannte Vorrichtung einen Fluidzufuhrkanal und einen Fluidabfuhrkanal auf, wobei zwischen Fluidzufuhrkanal und Fluidabfuhrkanal mindestens ein Fluidteilkanal, nämlich bei der gezeigten Ausführungsform gemäß der DE 195 19 519 zwei Fluidteilkanäle, vorhanden ist. Jedem Fluidteilkanal ist ein in Strömungsrichtung des zu filtrierenden Fluids gesehen im Wesentlichen senkrecht hierzu ausgerichtetes Filter zugeordnet, wobei dieses Filter von einem senkrecht zum Fluidteilkanal angeordneten, axial verschiebbaren Bolzen gehaltert ist. Dieser Bolzen wird, wie bereits zuvor im Zusammenhang mit der DE-AS 15 54 913 beschrieben, von einer entsprechenden Gehäusebohrung fluiddicht gelagert, so daß durch eine axiale Verschiebung des Bolzens das hiervon gehalterte Filter in Eingriff mit dem in dem Fluidteilkanal strömenden Fluid gebracht werden kann, um so das Fluid zu filtrieren. Bei einer Beladung des Filters mit abfiltrierten Partikeln wird hiernach durch eine axiale Verschiebung des Bolzens das entsprechend beladene Filter außer Eingriff mit dem Fluid gebracht, so daß dementsprechend die Filteroberfläche gereinigt werden kann.

Insbesondere im Bereich der Kunststoffverarbeitung, bei dem diese zuvor beschriebenen bekannten Vorrichtungen zum Filtrieren eines Fluidstromes bevorzugt eingesetzt werden, werden die bekannten Filtervorrichtungen bezüglich der Filtergröße und ihrer Dimensionen in der Regel nach einem aktuellen Bedarf ermittelt, wobei die dann ausgewählte Filtergröße in Korrelation mit dem jeweils verarbeiteten Kunststoff und den darin enthaltenen Verschmutzungen gesetzt wird. Da jedoch derartige Filtervorrichtungen in der Regel eine relativ lange Benutzungszeit haben, tritt häufig das Problem auf, daß die einmal ausgewählten Filtervorrichtungen bezüglich ihrer Filtergröße im Laufe der Benutzungszeit entweder zu groß oder zu klein dimensioniert sind, so daß eine optimale Produktion hierdurch nicht mehr gewährleistet ist.

Der vorliegenden Erfindung liegt die Aufgabe zugrunde, eine Vorrichtung zum Filtrieren eines Fluidstromes, insbesondere zum Filtrieren von Polymerschmelzen, der angegebenen Art zur Verfügung zu stellen, die eine besonders flexible Anpassung auf die unterschiedliche Produktionsbedingungen erlaubt.

Diese Aufgabe wird erfindungsgemäß durch eine Vorrichtung zum Filtrieren eines Fluidstromes, insbesondere zum Filtrieren einer Kunststoffschmelze, mit den kennzeichnenden Merkmalen des Patentanspruchs 1 sowie durch ein Filtermodul mit den kennzeichnenden Merkmalen des Patentanspruchs 28 gelöst.

Die erfindungsgemäße Vorrichtung zum Filtrieren eines Fluidstromes, insbesondere zum Filtrieren einer Kunststoffschmelze, weist mindestens einen Fluidzufuhrkanal oder einen ersten Verbindungsbereich zum Anschluß der Vorrichtung an einen vorhandenen Fluidzufuhrkanal und mindestens einen Fluidabfuhrkanal oder einen zweiten Verbindungsbereich zum Anschluß der Vorrichtung an einen vorhandenen Fluidabfuhrkanal auf. Der Fluidzufuhrkanal bzw. der entsprechende erste Verbindungsbereich ist mit dem Fluidabfuhrkanal bzw. mit dem zweiten Verbindungsbereich über mindestens einen Fluidteilkanal verbunden, wobei der mindestens eine Fluidteilkanal mindestens ein, in Strömungsrichtung des zu filtrierenden Fluids gesehen im Wesentlichen senkrecht hierzu ausgerichtetes Filter aufweist. Dieses mindestens eine Filter ist von einem senkrecht zum Fluidteilkanal ausgerichteten, relativ zum Gehäuse axial verschiebbaren Bolzen gehaltert. Im Unterschied zu dem zuvor beschriebenen Stand der Technik weist die erfindungsgemäße Vorrichtung eine module Bauweise auf, bei der in Strömungsrichtung des zu filtrierenden Fluids gesehen ein Verteilungsmodul, mindestens ein mit dem Fluidteilkanal versehenes Filtermodul und ein Endmodul miteinander lösbar verbunden sind. Das Verteilungsmodul umfaßt mindestens einen Verteilungskanal, der den Fluidzufuhrkanal bzw. den ersten Verbindungsbereich mit dem Fluidteilkanal verbindet, während das Endmodul mit mindestens einem Auslaßkanal versehen ist. Hierbei erstreckt sich dieser mindestens eine Auslaßkanal zwischen dem Fluidteilkanal und dem Fluidabfuhrkanal bzw. dem zweiten Verbindungsbereich. Mit anderen Worten sind in Strömungsrichtung des zu filtrierenden Fluids gesehen bei der erfindungsgemäßen Vorrichtung somit zunächst ein Verteilungsmodul, hiernach mindestens ein Filtermodul und daran anschließend ein Endmodul lösbar und fluiddicht miteinander verbunden, so daß das zu filtrierende Fluid von dem Fluidzufuhrkanal über den mindestens Verteilungskanal des Verteilungsmoduls, dem im Filtermodul versehenen mindestens einen Fluidteilkanal und dem im Endmodul angeordneten mindestens einen Auslaßkanal zum Fluidabfuhrkanal geführt wird, wobei die eigentliche Filtrierung bei der erfindungsgemäßen Vorrichtung durch das im Fluidteilkanal angeordnete und vom axial verschiebbaren Bolzen gehalterte mindestens eine Filter erfolgt.

Die erfindungsgemäße Vorrichtung weist eine Reihe von vorteilen auf. So ist zunächst als erster wesentlicher Vorteil herauszustellen, daß bedingt durch die module Bauweise die erfindungsgemäße Vorrichtung individuell und innerhalb von kürzester Zeit auf die jeweiligen Erfordernisse anpaßbar ist, da durch Anordnung einer beliebigen Zahl von Filtermodulen zwischen dem Verteilungsmodul und dem Endmodul die erforderliche Filterfläche entsprechend vergrößert oder verkleinert werden kann. Insbesondere dann, wenn die erfindungsgemäße Vorrichtung identische Filtermodule aufweist, lassen sich die Herstellungskosten der erfindungsgemäßen Vorrichtung erheblich reduzieren, da sich derartige identisch ausgestaltete Filtermodule einfach und kostengünstig in Serie herstellen lassen. Weiterhin erlaubt die module Bauweise, daß die entsprechenden Kanäle der erfindungsgemäßen Vorrichtung, sofern sie verschmutzt oder beispielsweise mit gecracktem Kunststoff verstopft sind, besonders leicht zugänglich sind, da durch die lösbare Verbindung der einzelnen Module die erfindungsgemäße Vorrichtung sehr schnell demontiert, gereinigt und erneut montiert werden kann. Weiterhin ermöglicht die module Bauweise, daß recht komplizierte ausgestaltete und verwinkelte Kanäle vorgesehen werden können, was beim Stand der Technik ebenfalls nicht möglich ist. Auch läßt sich die erfindungsgemäße Vorrichtung bei einer Änderung des Fließverhaltens des jeweils zu filtrierenden Fluids, so insbesondere bei einer Änderung der Viskosität, besonders einfach auf die jeweils erforderlichen Gegebenheiten anpassen, da durch die Anordnung von mehreren Filtermodulen die durchströmten Kanaldurchmesser entsprechend vergrößert werden, so daß insbesondere bei viskosen Fluiden durch die Vergrößerung der Anzahl der Filtermodule entsprechende höhere Durchsätze an filtrierten Fluiden erreichbar sind. Ferner wird durch eine Vergrößerung der Anzahl der Filtermodule die entsprechenden Reinigungszyklen der mit Schmutzpartikeln beladenen Filterflächen vergrößert, so daß die erfindungsgemäße Vorrichtung eine dauerhafte und störungsfreie Produktion erlaubt.

Als weiterer Vorteil der erfindungsgemäßen Vorrichtung ist herauszustellen, daß diese aufgrund der modulen Bauweise individuell und ohne große Schwierigkeiten an vorhandene Dimensionen anpaßbar ist, was dadurch bei der erfindungsgemäßen Vorrichtung besonders einfach erreichbar ist, daß hierbei einzelne, relativ kompakte Filtermodule insbesondere hintereinander, übereinander und/oder nebeneinander, angeordnet werden, so daß dementsprechend der vorhandene Raum optimal genutzt werden kann. Dieser Vorteil tritt insbesondere dann ein, wenn die erfindungsgemäße Vorrichtung zwischen einem Extruder für Kunststoffschmelzen und einem Werkzeug oder einer entsprechenden Düse angeordnet wird, da in der Regel bei vorhandenen Produktionsmaschinen der Platz zwischen dem Extruder und dem diesbezüglichen Werkzeug vorgegeben und bisweilen auch insbesondere der axiale Abstand begrenzt ist.

Wie bereits vorstehend ausgeführt ist, bestehen insbesondere verschiedene Möglichkeiten, die Filtermodule, sofern bei der erfindungsgemäßen Vorrichtung zumindestens zwei Filtermodule vorgesehen sind, anzuordnen.

So sieht eine besonders geeignete Ausführungsform der erfindungsgemäßen Vorrichtung vor, daß diese eine Vielzahl von nebeneinander und/oder übereinander angeordneten Filtermodulen umfaßt. Hierbei werden vorzugsweise zwei bis zehn Filtermodule nebeneinanderliegend oder übereinanderliegend so angeordnet, daß das zu filtrierende Fluid vorzugsweise über ein gemeinsames Verteilungsmodul, das mit den Filtermodulen fluiddicht verbunden ist, zugeführt wird, wobei dieses eine Verteilungsmodul dann eine der Anzahl der Filtermodule entsprechende Anzahl von Verteilungskanälen aufweist. Stromab der Vielzahl der Filtermodule ist dann bei dieser Ausführungsform der erfindungsgemäßen Vorrichtung insbesondere ein gemeinsames Endmodul vorgesehen, wobei dieses Endmodul dann ebenfalls eine der Zahl der Filtermodule entsprechende Anzahl von Auslaßkanälen besitzt. Wahlweise kann bei dieser Ausführungsform die Vielzahl der Verteilungskanäle und/oder die Vielzahl der Auslaßkanäle im Verteilungsmodul bzw. im Endmodul zu einem Kanal zusammengefaßt werden, der dann zum Fluidzufuhrkanal bzw. zum Fluidabfuhrkanal ausgerichtet ist oder es besteht die Möglichkeit, daß jeder einzelne Verteilungskanal und jeder einzelne Auslaßkanal in den Fluidzufuhrkanal bzw. den Fluidabfuhrkanal mündet. Diese Ausführungsform der erfindungsgemäßen Vorrichtung wird immer dann verwendet, wenn die erfindungsgemäße Vorrichtung zur Filtrierung von Kunststoffschmelzen eingesetzt wird und wenn hierbei aufgrund der vorhandenen Maschineneinrichtung nur ein begrenzter, nicht veränderbarer Abstand zwischen dem Extruder und dem Werkzeug bzw. der Düse vorhanden ist.

Bei einer weiteren Ausführungsform der erfindungsgemäßen Vorrichtung ist die Vielzahl der Filtermodule in Strömungsrichtung des zu filtrierenden Fluids gesehen hintereinander angeordnet, wobei auch hier bevorzugt zwei bis zehn Filtermodule zwischen dem vorzugsweise einen Verteilungsmodul und dem vorzugsweise einen Endmodul angeordnet sind. Bei dieser Ausführungsform der erfindungsgemäßen Vorrichtung weist dann das Verteilungsmodul einen einzigen Verteilungskanal und das Endmodul einen einzigen Auslaßkanal auf, wobei dieser Verteilungskanal dann an den Fluidzufuhrkanal oder den ersten Verbindungsbereich und der Auslaßkanal an den Fluidabfuhrkanal oder an den zweiten Verbindungsbereich anschließbar ist. Mit Ausnahme des unmittelbar an das Verteilungsmodul und des unmittelbar an das Endmodul angeordneten Filtermoduls besitzt jedes weitere Filtermodul stromauf des Filters einen ersten Verbindungskanal und stromab des Filters einen zweiten Verbindungskanal, wobei sich der Fluidteilkanal zwischen dem ersten und zweiten Verbindungskanal erstreckt. Das unmittelbar an das Verteilungsmodul angrenzende Filtermodul besitzt nur den ersten Verbindungskanal sowie ggf. einen Abschnitt des zweiten Verteilungskanals, während das unmittelbar an das Endmodul angrenzende Filtermodul nur den zweiten Verbindungskanal sowie ggf. einen Abschnitt des ersten Verteilungskanals aufweist. Der erste und zweite Verbindungskanal sind derart angeordnet, daß der erste Verbindungskanal eines jeden Filtermoduls stromauf des Filters eine Fluidverbindung zwischen dem Verteilungskanal und dem Fluidteilkanal und der zweite Verbindungskanal stromab des Filters eine Fluidverbindung zwischen dem Fluidteilkanal und dem Auslaßkanal des Endmoduls herstellt. Mit anderen Worten sind somit bei dieser Weiterbildung der erfindungsgemäßen Vorrichtung zwischen dem Verteilungsmodul und dem Endmodul mindestens ein Filtermodul, vorzugsweise mindestens zwei Filtermodule, vorgesehen, wobei diese Filtermodule in Strömungsrichtung des zu filtrierenden Fluids gesehen hintereinander angeordnet sind. Um bei dieser Ausführungsform eine ordnungsgemäße Versorgung der Vielzahl von Fluidteilkanälen, in denen die Filter angeordnet sind, sicherzustellen, weist jedes Filtermodul, mit Ausnahme des an das Verteilungsmodul und des an das Endmodul stoßenden Filtermoduls, entsprechende erste und zweite Verbindungskanäle auf, wobei die ersten Verbindungskanäle zur Zuführung des zu filtrierenden Fluids und die zweiten Verbindungskanäle zur Abführung des filtrierten Fluids dienen. Um hierbei eine gleichmäßige Verteilung des zu filtrierenden Fluidstromes auf die einzelnen Filtermodule sicherzustellen, empfiehlt es sich, desweiteren die Dimension des Verteilungskanales derart auf die Summe der Durchtrittsflächen der ersten Verbindungskanäle abzustimmen, daß die Dimension des Verteilungskanales erheblich größer ist, insbesondere um den Faktor 5 bis 20, als die Summe der Durchtrittsflächen der ersten Verbindungskanäle. Diese Ausführungsform der erfindungsgemäßen Vorrichtung findet insbesondere dann Anwendung, wenn die erfindungsgemäße Vorrichtung zur Filtration einer Kunststoffschmelze eingesetzt wird und hierbei der Abstand zwischen dem Extruder und einem dem Extruder nachgeschalteten Werkzeug bzw. einer Düse nicht begrenzt ist.

Neben den zuvor aufgeführten grundsätzlichen beiden Möglichkeiten besteht natürlich auch die Möglichkeit, die Vielzahl der Filtermodule sowohl hintereinander als auch nebeneinander und/oder übereinander zwischen dem Verteilungsmodul und dem Endmodul anzuordnen. Hierbei ist es dann lediglich erforderlich, daß das Verteilungsmodul eine der Anzahl der Reihen der hintereinander angeordneten Filtermodule entsprechende Anzahl von Verteilungskanälen und das Endmodul eine entsprechende Anzahl von Auslaßkanälen aufweist, während jedes Filtermodul, mit Ausnahme der beiden Filtermodule, die jeweils unmittelbar an das Verteilungsmodul und das Endmodul stoßen, die bereits zuvor beschriebenen ersten und zweiten Verbindungskanäle, die die Fluidteilkanäle eines jeden Filtermoduls miteinander verbinden, aufweisen. Desweiteren weisen die beiden Filtermodule, die unmittelbar an das Verteilungsmodul stoßen, nur den stromauf des Filters angeordneten ersten Verbindungskanal sowie ggf. einen kurzen Abschnitt des zweiten Verteilungskanals und das Filtermodul, das unmittelbar an das Endmodul stößt, nur den stromab des Filters vorgesehenen zweiten Verbindungskanal sowie ggf. einen kurzen Abschnitt des ersten Verbindungskanals auf, wie dies bereits vorstehend ausführlich beschrieben ist. Mit einer derartigen Ausführungsform der erfindungsgemäßen Vorrichtung ist es möglich, in äußerst kompakter Bauweise eine sehr variabel zu gestaltende Filterkapazität zur Verfügung zu stellen.

Um bei den zuvor beschriebenen Ausführungsformen der erfindungsgemäßen Vorrichtung, bei dem die Filtermodule einen ersten Verbindungskanal und/oder einen zweiten Verbindungskanal aufweisen, ein fluiddichtes Verbinden von benachbarten Filtermodulen oder ein fluiddichtes Verbinden des Verteilungsmoduls mit dem jeweiligen Filtermodul bzw. des Endmoduls mit dem jeweiligen Filtermodul sicherzustellen, bestehen mehrere Möglichkeiten.

So können die Verbindungskanäle über entsprechende Einsatzstücke, die sowohl in den entsprechenden Kanal des einen Moduls als auch in den anstoßenden Kanal des anderen Moduls hineinragen, fluiddicht miteinander verbunden werden, wobei es sich jedoch anbietet, den Innendurchmesser dieser Einsatzstücke so auszugestalten, daß sein Innendurchmesser dem Innendurchmesser der Kanäle entspricht. Um dies zu erreichen, werden die Endabschnitte der Kanäle entsprechend aufgebohrt, so daß sie die diesbezüglichen Einsatzstücke aufnehmen, ohne daß dadurch eine Kanalverengung entsteht.

Besonders einfach läßt sich jedoch die fluiddichte Verbindung von benachbarten Modulen dadurch erreichen, daß die aneinanderstoßenden Module im Bereich der Kanäle über entsprechende Dichtflächen miteinander verbunden sind, so daß durch eine entsprechende planare Ausgestaltung dieser Dichtflächen dann die erforderliche Dichtheit sichergestellt ist.

Bezüglich der Ausrichtung des ersten Verbindungskanales relativ zum zweiten Verbindungskanal bietet es sich an, den ersten Verbindungskanal parallel zum zweiten Verbindungskanal auszurichten, so daß hierdurch die Länge der Verbindungskanäle optimiert wird.

Um bei den zuvor beschriebenen Ausführungsformen eine fluiddichte Verbindung zwischen dem Verteilungsmodul und dem Filtermodul, zwischen dem Endmodul und dem davor geschalteten Filtermodul oder zwischen zwei benachbarten Filtermodulen sicherzustellen, weist eine besonders vorteilhafte Ausführungsform der erfindungsgemäßen Vorrichtung solche Module auf, bei denen auf der diesbezüglichen Verbindungsfläche entsprechende Dichtflächen vorgesehen sind. Hierbei nehmen diese Dichtflächen vorzugsweise den gesamten Bereich der Flächen ein, die bei der Verbindung der Module und somit beim Zusammenbau der erfindungsgemäßen Vorrichtung aneinanderstoßen.

Bei einer besonders geeigneten und haltbaren Ausführungsform der erfindungsgemäßen Vorrichtung weist jedes Filtermodul eine erste Dichtfläche und eine zu dieser entgegengesetzt angeordnete zweite Dichtfläche auf, so daß über diese beiden Dichtflächen dann jeweils zwei oder mehr Filtermodule über einander zugeordnete Dichtflächen lösbar verbindbar sind. Desweiteren kann das jeweilige erste Filtermodul über die erste Dichtfläche mit der am Verteilungsmodul vorgesehenen Dichtfläche und das jeweilige letzte Filtermodul über die zweite Dichtfläche mit dem am Endmodul vorgesehenen Dichtfläche fluiddicht und lösbar verbunden werden, ohne daß es hierfür erforderlich ist, besonderen konstruktiven Aufwand zu betreiben.

Um bei den zuvor beschriebenen Ausführungsformen der erfindungsgemäßen Vorrichtung eine beliebige Anzahl von Filtermodulen hintereinander bzw. nebeneinander oder übereinander anzuordnen, empfiehlt es sich, daß die erste Dichtfläche und die zweite Dichtfläche im Wesentlichen parallel zueinander ausgerichtet sind.

Desweiteren ist es vorteilhaft, den Fluidteilkanal in den Filtermodulen insbesondere unter einem Winkel α zwischen 30° und 65° geneigt zu den Dichtflächen anzuordnen, während sich der erste Verbindungskanal und der zweite Verbindungskanal im Wesentlichen senkrecht zur Dichtfläche erstreckt.

Um die für die axiale Verschiebung des Bolzens erforderliche Hydraulik ebenfalls bei der erfindungsgemäßen Vorrichtung zu vereinheitlichen und möglicherweise den Aufwand hierfür zu minimieren, ist es besonders vorteilhaft, die in der Vielzahl von Filtermodulen vorgesehenen Fluidteilkanäle so auszubilden, daß sie parallel zueinander ausgerichtet sind.

Insbesondere dann, wenn die erfindungsgemäße Vorrichtung eine Vielzahl von baugleichen Filtermodulen aufweist, deren Fluidteilkanäle vorzugsweise so ausgerichtet sind, wie dies vorstehend beschrieben ist, läßt sich bei dieser Ausgestaltung der erfindungsgemäßen Vorrichtung die für die Verschiebung des Bolzens erforderliche Hydraulik dahingehend vereinfachen, daß hier auch eine einheitliche und baugleiche Hydraulik verwendet wird. Eine weitere Kostenersparnis wird dadurch erreicht, daß die für die axiale Verschiebung der Bolzen erforderliche Hydraulik nicht in einer der Anzahl der Bolzen entsprechenden Anzahl vorgesehen ist, sondern daß hier mehrere Bolzen einer gemeinsamen Hydraulik zugeordnet werden, die dementsprechend in ihrer Position zu dem jeweils zu verschiebenden Bolzen dann ausgerichtet wird, wenn eine Verschiebung dieses Bolzens erwünscht ist.

Wie bereits vorstehend bei der erfindungsgemäßen Vorrichtung beschrieben ist, weist das Verteilungsmodul wahlweise den Fluidzufuhrkanal oder vorzugsweise den ersten Verbindungsbereich auf, um das Verteilungsmodul fluiddicht und lösbar an einen vorhandenen Fluidzufuhrkanal anzuschließen. Ebenso ist das Endmodul wahlweise mit dem Fluidabfuhrkanal oder vorzugsweise mit dem zweiten Verbindungsbereich versehen, wobei es der zweite Verbindungsbereich ermöglichst, das Endmodul fluiddicht und lösbar an einen vorhandenen Fluidabfuhrkanal anzuschließen.

Bereits vorstehend ist ausgeführt, daß jedes Filtermodul einen Fluidteilkanal aufweist, in dem ein einziger, axial verschiebbarer Bolzen vorgesehen ist.

Eine wesentlich größere Filterkapazität bei nur geringfügiger Vergrößerung der Bauweise ermöglicht jedoch eine solche Ausführungsform der erfindungsgemäßen Vorrichtung, bei dem jedes Filtermodul jeweils zwei Fluidteilkanäle aufweist, wobei jeder Fluidteilkanal mit jeweils einem axial verschiebbaren Bolzen versehen ist. Hierbei wird somit der zu filtrierende Fluidstrom, der über das Verteilungsmodul zugeführt wird, in jedem Filtermodul auf zwei Teilströme aufgeteilt, so daß dementsprechend ein derartiges Filtermodul im Vergleich zu einem solchen Filtermodul, das nur einen Fluidteilkanal besitzt, eine doppelte Kapazität aufweist.

Wie bereits vorstehend bei der Ausführungsform der erfindungsgemäßen Vorrichtung, bei der jedes Fluidmodul nur jeweils einen einzigen Fluidteilkanal aufweist, beschrieben wurde, besitzt auch eine vorteilhafte Weiterbildung der zuvor beschriebenen Ausführungsform der erfindungsgemäßen Vorrichtung, bei der jedes Filtermodul zwei Fluidteilkanäle besitzt, in jedem Filtermodul stromauf des Filters den bereits zuvor beschriebenen ersten Verbindungskanal und stromab eines jeden Filters den zweiten Verbindungskanal. Hierbei ist jedoch für das Filtermodul, das unmittelbar an das Verteilungsmodul mündet, der zweite Verbindungskanal ggf. nur als kurzer Abschnitt oder überhaupt nicht vorhanden, während das andere Filtermodul, das unmittelbar vor dem Endmodul positioniert ist, keinen ersten Verbindungskanal umfaßt. Um bei dieser Ausführungsvariante der erfindungsgemäßen Vorrichtung eine Vereinfachung der Bauweise herbeizuführen, ist der zweite Verbindungskanal derart positioniert und ausgestaltet, daß er das filtrierte Fluid von beiden Fluidteilkanälen gemeinsam abführt, während vorzugsweise zwei erste Verbindungskanäle pro Filtermodul so angeordnet und positioniert sind, daß zu jedem Fluidteilkanal über einen separaten ersten Verbindungskanal das jeweils zu filtrierende Fluid zugeführt wird.

Wie bereits zuvor beschrieben ist, bietet es sich zur Verkürzung der Kanallängen an, den gemeinsamen zweiten Verbindungskanal parallel zu den beiden ersten Verbindungskanälen auszurichten.

Eine weitere Erhöhung der Filtrierleistung wird bei der erfindungsgemäßen Vorrichtung dadurch erreicht, daß das Endmodul ebenfalls als Filtermodul ausgebildet ist, wobei bei dieser Ausführungsform der erfindungsgemäßen Vorrichtung dann das Endmodul wahlweise einen Fluidteilkanal oder mehrere, insbesondere zwei, Fluidteilkanäle aufweisen kann.

Insbesondere dann, wenn bei der zuvor beschriebenen Ausführungsform der Auslaßkanal des Endmoduls den zweiten Verbindungskanal ausbildet, der dann vorzugsweise endseitig in Strömungsrichtung des filtrierten Fluids gesehen den zweiten Verbindungsbereich zum Anschluß an einen vorhandenen Fluidabfuhrkanal aufweist, besitzt diese Ausführungsform bei einer extrem kompakten Bauweise eine hohe Filtrierkapazität.

Eine besonders vorteilhafte und vielseitig anzuwendende Ausführungsform der erfindungsgemäßen Vorrichtung weist mindestens zwei, in getrennt voneinander angeordneten Bolzen vorgesehene Filter auf, wobei es sich hierbei wahlweise um zwei Filtermodule mit jeweils einem Fluidteilkanal oder um ein Filtermodul mit zwei Fluidteilkanälen handeln kann. Hierbei sind in den Kanälen stromauf der Bolzen mindestens zwei Sperrelemente vorgesehen, die derart angeordnet und ausgebildet sind, daß jedes Sperrelement zwischen einer ersten Stellung, in der der Fluidstrom zu den beiden Filtern nicht behindert ist, und einer zweiten Stellung, in der der Fluidstrom zu den beiden Filter hin unterbrochen ist, bewegbar. Desweiteren ist zwischen dem Sperrelement und dem diesen zugeordneten Filter jeweils ein Ablaßelement vorgesehen, daß im geöffneten Zustand einen Fluidteilstrom zur Atmosphäre hin abführt. Hierbei ermöglicht diese Ausführungsform der erfindungsgemäßen Vorrichtung eine kontinuierlicher Regenerierung der mit Schmutzpartikeln beladenen Filter, wobei hierzu dann eines der Sperrelemente aus seiner ersten Stellung, in der der Fluidstrom zum Filter nicht behindert ist, in eine zweite Stellung überführt wird, so daß der Fluidstrom zum Filter hin unterbrochen wird. Das jeweils andere Sperrelement verbleibt dabei in der ersten Stellung. Nach Überführung des Ablaßelementes in seinen geöffneten Zustand wird in dem abgesperrten Kanal aufgrund des von dem Werkzeug oder der Düse hervorgerufenen Gegendrucks der Fluidstrom umgekehrt, so daß das Filter entgegengesetzt zur Filtrierrichtung von bereits filtriertem Fluid durchströmt und das so mit Schmutzpartikeln versehene Fluid dann über das geöffnete Ablaßelement zur Atmosphäre hin abgeführt werden kann. Diese kontinuierliche Regenerierung oder Rückspülung des Filters bzw. der Filter wird nachfolgend noch anhand von konkreten Ausführungsformen näher erläutert.

Bezüglich der Ausgestaltung des Ablaßelementes bestehen bei der zuvor beschriebenen Ausführungsform mehrere Möglichkeiten. So sieht die erste Möglichkeit vor, daß hierbei das Sperrelement selbst als Ablaßelement ausbildet ist, derart, daß das Sperrelement in eine dritte Stellung bringbar ist, wobei in dieser dritten Stellung des Sperrelementes der Fluidstrom zum Filter hin unterbrochen ist, jedoch ein Rückstrom des Fluids vom Filter zum Sperrelement und über das Sperrelement hinaus zur Atmosphäre hin eröffnet ist.

Um ein derartiges Sperrelement zu realisieren, bietet es sich an, das Sperrelement als axial verschiebbaren oder drehbaren Bolzen auszugestalten, wie dieses im Detail in der DE 195 19 519 C2 beschrieben ist.

Eine andere vorteilhafte Ausgestaltung der zuvor beschriebenen Ausführungsform der erfindungsgemäßen Vorrichtung, bei der die Filter rückspülbar sind, sieht vor, daß der Bolzen, der das Filter haltert, gleichzeitig das Sperrelement und das Ablaßelement ausbildet. Hier werden somit durch eine axiale Verschiebung des Bolzens die zuvor beschriebenen drei Stellungen herbeigeführt, so daß bei dieser Ausführungsform der erfindungsgemäßen Vorrichtung kein separates Sperrelement und auch kein separates Ablaßelement vorhanden ist.

Eine besonders vorteilhafte Ausgestaltung der zuvor beschriebenen rückspülbaren Ausführungsform der erfindungsgemäßen Vorrichtung sieht vor, daß jedem Fluidteilkanal stromauf des Filters das Ablaßelement zugeordnet ist, während in einem der weiteren Kanäle dann zusätzlich ein Sperrelement vorhanden ist, das, wie vorstehend beschrieben, zwischen der ersten Stellung und der zweiten Stellung bewegbar ist. Insbesondere dann, wenn dieses Ablaßelement bezüglich seiner Durchflußmenge regelbar ist, erlaubt es ein kontrolliertes Regenerieren des jeweils zugeordneten Filters, so daß hier nicht unnötigerweise bereits filtriertes Fluid verloren geht.

Abhängig von der jeweiligen Ausgestaltung der erfindungsgemäßen Vorrichtung und insbesondere der Anzahl der Filtermodule bestehen mehrere Möglichkeiten, die zuvor beschriebenen Ausführungsformen der Sperrelemente sowie der Ablaßelemente in den entsprechenden Kanälen vorzusehen. Eine besonders preiswerte Weiterbildung sieht vor, daß hierbei einer Gruppe von Filtern jeweils ein gemeinsames Sperrelement und/oder ein gemeinsames Ablaßelement zugeordnet ist, so daß die erste Gruppe der Filter dann gemeinsam rückgespült wird, während die andere Gruppe von Filters weiter die Zufuhr von filtriertem Fluid zum Endmodul sicherstellt.

Ist bei dieser Ausführungsform das Verteilungsmodul so ausgestaltet, daß es mindestens zwei Verteilungskanäle aufweist, so läßt sich durch Anordnung eines Sperrelementes in jedem Verteilungskanal ein derartiges gruppenweises Rückspülen von Filtern besonders einfach herbeiführen.

Ist es jedoch erwünscht, daß jedes Filter einzeln und unabhängig von den anderen Filtern rückgespült wird, so ist es erforderlich, daß stromauf des Filters und insbesondere jedem das jeweilige Filter versorgenden Fluidteilkanal das Sperrelement und/oder das Ablaßelement zugeordnet ist.

Bei den zuvor beschriebenen Ausführungsformen der erfindungsgemäßen Vorrichtung wurde ausgeführt, daß jeder Bolzen mindestens ein Filter haltert. Abhängig von der Größe eines jeden Filtermoduls und den Abmessungen des zugehörigen Fluidteilkanals ist es jedoch auch möglich, daß jeder Bolzen mindestens zwei, vorzugsweise zwei bis sechs, mit axialem Abstand voneinander angeordnete Filter haltert, so daß wahlweise mehrere Filter gleichzeitig durchströmt werden oder Filter ausgetauscht werden können, ohne daß es dafür erforderlich ist, den Fluidstrom in diesem Fluidteilkanal zu unterbrechen.

Die vorliegende Erfindung betrifft desweiteren ein Filtermodul zur Verwendung in der erfindungsgemäßen Vorrichtung.

Hierbei weist das Filtermodul eine erste und eine zweite Dichtfläche zur fluiddichten und lösbaren Anbringung eines weiteren Filtermoduls, eines Verteilungsmoduls oder eines Endmoduls auf, wobei das Filtermodul mit mindestens einem Fluidteilkanal zur Aufnahme von mindestens einem, von einem axial verschiebbaren Bolzen gehalterten Filter versehen ist. Um das zu filtrierende Fluid dem Filtermodul und somit dem in dem Fluidteilkanal angeordneten Filter zuzuführen, besitzt das erfindungsgemäße Filtermodul desweiteren einen ersten Verbindungskanal, der stromauf des Filters vorgesehen ist. Stromab des Filters mündet der Fluidteilkanal in einen zweiten Verbindungskanal, wobei über diesen zweiten Verbindungskanal das filtrierte Fluids zum Endmodul abgeführt wird.

Das zuvor beschriebene erfindungsgemäße Filtermodul weist alle die Vorteile analog auf, wie sie vorstehend für die erfindungsgemäße Vorrichtung beschrieben sind. Insbesondere ist als ein wesentlicher Vorteil herauszustellen, daß sich das erfindungsgemäße Filtermodul bei einer äußerst kompakten Bauweise serienmäßig besonders preiswert herstellen läßt.

Selbst dann, wenn das erfindungsgemäße Filtermodul unmittelbar an das Verteilungsmodul fluiddicht befestigt wird, ist eine Änderung der Serienbauweise nicht notwendig, da in diesem Fall der zweite Verbindungskanal, der bedingt durch die Anbringung des Filtermoduls am Verteilungsmodul nur teilweise erforderlich ist, leicht, beispielsweise durch einen entsprechend eingepaßten Bolzen, größtenteils oder vollständig verschlossen werden kann. Dieser Bolzen kann jedoch relativ einfach wieder entfernt werden, so daß der zweite Verbindungskanal wieder zur Verfügung steht. Analoges gilt für das Filtermodul, das unmittelbar an das Endmodul angrenzt und mit diesem fluiddicht verbunden ist, wobei hier ein Teil des ersten Verbindungskanals vorzugsweise durch einen entsprechend eingepaßten Bolzen verschlossen wird.

Wie bereits zuvor ausgeführt ist, weist das erfindungsgemäße Filtermodul vorzugsweise eine erste und zweite Dichtfläche auf, die parallel zueinander ausgerichtet und entgegengesetzt angeordnet sind. Hierbei ermöglichen diese beiden Dichtflächen in besonders einfacher Weise, daß die Filtermodule untereinander oder das Filtermodul mit dem Verteilungsmodul oder das Filtermodul mit dem Endmodul lösbar und fluiddicht zu verbinden ist, so daß eine hieraus erstellte Vorrichtung abhängig von den jeweiligen Erfordernissen schnell und einfach anpaßbar ist.

Insbesondere sind der erste Verbindungskanal und/oder der zweite Verbindungskanal senkrecht zur Dichtfläche ausgerichtet, so daß hierdurch die entsprechende Kanallänge optimiert wird.

Eine besonders kompakte und vielseitig verwendbare Ausführungsform des erfindungsgemäßen Filtermoduls sieht vor, daß das Filtermodul zwei Fluidteilkanäle aufweist, wobei dementsprechend auch zwei Bolzen, die jeweils einem Fluidteilkanal zugeordnet sind, vorhanden sind.

Eine besonders platzsparende Bauweise wird auch dadurch bei dem erfindungsgemäßen Filtermodul erreicht, daß die Fluidteilkanäle unter einem Neigungswinkel α, der insbesondere zwischen 30° und 65° variiert und vorzugsweise bei 45° liegt, relativ zu den Verbindungskanälen ausgerichtet sind.

Bei einer besonders geeigneten Ausführungsform des erfindungsgemäßen Filtermoduls weist dieses zwei Fluidteilkanäle auf, wobei desweiteren bei dieser Ausführungsform zwei erste mit Abstand voneinander angeordnete Verbindungskanäle vorgesehen sind. Hierbei ist jeder erste Verbindungskanal dem Einlaß der beiden, mit Abstand voneinander angeordneten Fluidteilkanälen zugeordnet, derart, daß über diese beiden ersten Verbindungskanäle jeweils ein Teilstrom des zu filtrierenden Fluids den Fluidteilkanälen zugeführt wird. Stromab des Filters mündet dann jeder Fluidteilkanal in mindestens einen zweiten Verbindungskanal, so daß dementsprechend das filtrierte Fluid über diesen zweiten Verbindungskanal abgeführt wird. Besonders platzsparend ist es jedoch, wenn zwei zweite Verbindungskanäle zu einem gemeinsamen zweiten Verbindungskanal zusammengefaßt werden, wobei diese Zusammenfassung der beiden zweiten Verbindungskanäle zu einem gemeinsamen zweiten Verbindungskanal den Vorteil aufweist, daß hierdurch die Herstellungskosten des erfindungsgemäßen Filtermoduls weiter verringert werden.

Vorteilhafte Weiterbildungen der erfindungsgemäßen Vorrichtung sowie des erfindungsgemäßen Filtermoduls sind in den Unteransprüchen angegeben.

Die erfindungsgemäße Vorrichtung sowie das erfindungsgemäße Filtermodul wird nachfolgend anhang der Zeichnungen näher erläutert. Es zeigen:
- Figur 1: eine schematische seitliche Schnittansicht einer ersten Ausführungsform mit einem Filtermodul;
- Figur 2: eine schematische seitliche Schnittansicht einer zweiten Ausführungsform mit zwei Filtermodulen;
- Figur 3: eine schematische seitliche Schnittansicht einer dritten Ausführungsform mit drei Filtermodulen;
- Figur 4: eine schematische seitliche Schnittansicht einer vierten Ausführungsform mit vier Filtermodulen;
- Figur 5: eine schematische seitliche Schnittansicht einer fünften Ausführungsform mit vier, paarweise angeordneten Filtermodulen;
- Figur 6: eine schematische seitliche Schnittansicht einer sechsten Ausführungsform mit sechs, paarweise angeordneten Filtermodulen;
- Figur 7: eine schematische seitliche Schnittansicht einer siebten Ausführungsform mit drei, übereinander angeordneten Filtermodulen;
- Figur 8: eine schematische seitliche Schnittansicht einer achten Ausführungsform mit sechs, übereinander angeordneten Filtermodulen;
- Figur 9: eine schematische seitliche Schnittansicht einer neunten Ausführungsform mit einem Filtermodul, das zwei Fluidteilkanäle aufweist;
- Figur 10: eine schematische seitliche Schnittansicht einer zehnten Ausführungsform mit zwei Filtermodulen, die jeweils zwei Fluidteilkanäle aufweisen;
- Figur 11: eine schematische seitliche Schnittansicht einer elften Ausführungsform mit drei Filtermodulen, die jeweils zwei Fluidteilkanäle aufweisen;
- Figur 12: eine schematische seitliche Schnittansicht einer zwölften Ausführungsform mit zwei übereinander angeordneten Filtermodulen, die jeweils zwei Fluidteilkanäle besitzen;
- Figur 13: eine schematische seitliche Schnittansicht einer dreizehnten Ausführungsform mit drei Filtermodulen, die jeweils zwei Fluidteilkanäle besitzen;
- Figur 14: eine schematische Darstellung der verschiedenen Arbeitspositionen des Bolzens gemäß dem Schnitt A-B in Figur 13;
- Figur 15: eine schematische Schnittansicht einer vierzehnten Ausführungsform mit drei Filtermodulen, die jeweils zwei Fluidteilkanäle aufweisen; und
- Figur 16: eine schematische seitliche Schnittansicht einer fünfzehnten Ausführungsform mit drei Filtermodulen, die jeweils zwei Fluidteilkanäle besitzen.

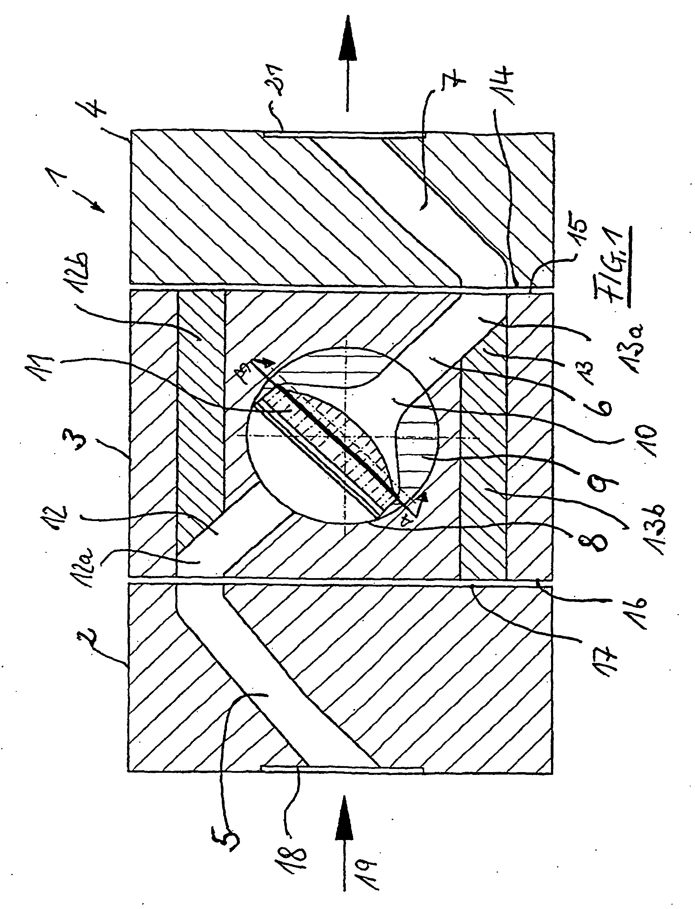

In den Figuren 1 bis 16 sind die selben Teile mit den selben Bezugszeichen versehen.

Die in Figur 1 insgesamt mit 1 bezeichnete Vorrichtung weist ein Verteilungsmodul 2, ein Filtermodul 3 sowie in Endmodul 4 auf, wobei das Verteilungsmodul 2 einen Verteilungskanal 5, das Filtermodul 3 einen Fluidteilkanal 6 und das Endmodul 4 einen einzigen Auslaßkanal 7 aufweist. Innerhalb des Fluidteilkanals 6 ist in einer Bohrung 8, die sich senkrecht zur Zeichenebene erstreckt, ein axial verschiebbarer Bolzen 9 vorgesehen, wobei der axial verschiebbare Bolzen 9 eine sich durch die gesamte Materialstärke radial erstreckende Aussparung 10 aufweist, in der mindestens ein Filter 11, das senkrecht zur Strömungsrichtung des Fluids im Fluidteilkanal 6 ausgerichtet ist, angeordnet ist.

Desweiteren weist das Filtermodul 3 einen ersten Verbindungskanal 12 sowie einen zweiten Verbindungskanal 13 auf, wobei der erste Verbindungskanal 12 stromauf des Filters 11 und der zweite Verbindungskanal 13 stromab des Filters 11 positioniert ist.

Auf seiner zum Verteilungsmodul 2 weisende Fläche ist das Filtermodul 3 mit einer ersten Dichtfläche 16 und auf einer zum Endmodul 4 weisenden Fläche ist das Filtermodul 3 mit einer zweiten Dichtfläche 15 versehen, wobei entsprechende, am Verteilungsmodul 2 und am Endmodul 4 vorgesehene Dichtflächen 17 und 14 so auf die Dichtflächen 16 und 15 angepaßt sind, daß über diese Dichtflächen 14 bis 17 die Vorrichtung 1 fluiddicht und lösbar zusammensetzbar ist.

Die in Figur 1 gezeigte Vorrichtung arbeitet wie folgt.

Ausgehend von einem nicht gezeigten Fluidzufuhrkanal, der über einen ersten Verbindungsbereich 18 mit dem Verteilungsmodul 2 fluiddicht verbunden wird, wird das zu filtrierende Fluid in Pfeilrichtung 19 in den Verteilungskanal 5 des Verteilungsmoduls 2 eingeführt. Dieses zu filtrierende Fluid strömt dann über einen Abschnitt 12 a des ersten Verbindungskanals 12 in den Fluidteilkanal 6 und gelangt dann in die Aussparung 10 und wird durch das Filter 11, das senkrecht im Fluidteilkanal 6 vorgesehen ist, filtriert, so daß am Auslaß des Fluidteilkanals 6 das filtrierte Fluid über einen Abschnitt 13 a des zweiten Verbindungskanals 13 zum Auslaßkanal 7 des Endmoduls 4 geführt wird.

Am Auslaß des Auslaßkanals 7 schließt sich dann der zweite Verbindungsbereich 21 an, wobei über den zweiten Verbindungsbereich 21 das Endmodul 4 an einen Fluidabfuhrkanal angeschlossen wird, der wiederum dann zu einem entsprechenden Werkzeug oder Düse führt (nicht abgebildet).

Damit die Bereiche des ersten Verbindungskanals und des zweiten Verbindungskanals, die vom Fluid nicht durchströmt werden, nicht, beispielsweise durch gecrackten Kunststoff, verschmutzt werden, sind in diesen Bereichen des ersten Verbindungskanals 12 und des zweiten Verbindungskanals 13 Bolzen 12 b bzw. 13 b eingepaßt, die diese nicht benutzten Kanalbereiche verschließen.

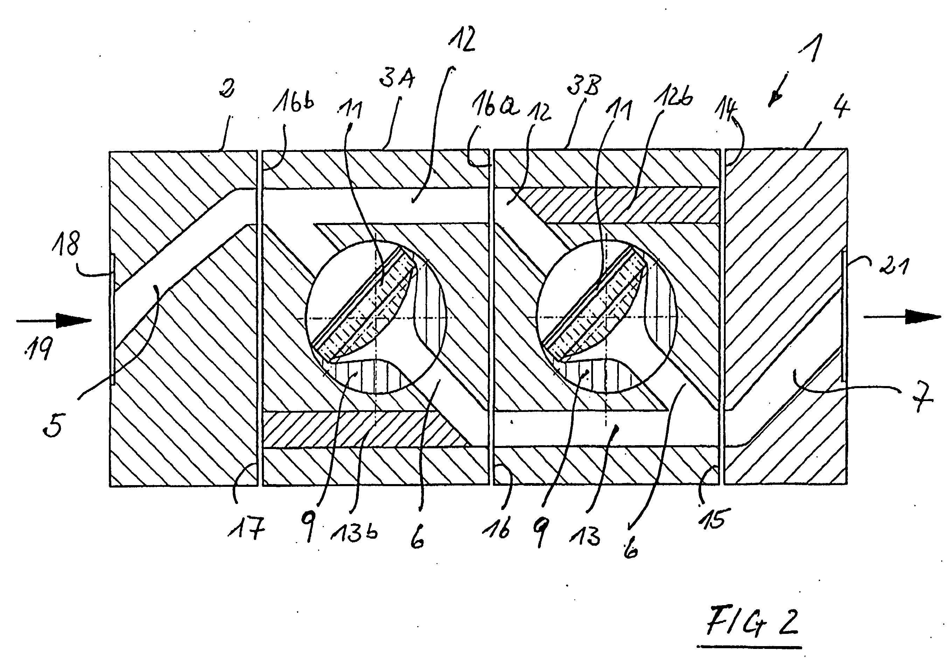

Die in Figur 2 gezeigte Ausführungsform unterscheidet sich von der in Figur 1 gezeigten und zuvor beschriebenen Ausführungsform dahingehend, daß hierbei nicht nur ein Filtermodul sondern zwei Filtermodule 3 A und 3 B vorhanden sind, wobei diese beiden Filtermodule 3 A und 3 B über entsprechende Dichtflächen 14, 15, 16, 16 a, 16 b und 17 sowohl miteinander (16, 16 a) als auch als Gesamtheit über die Dichtflächen 16 b und 17 mit dem Verteilungsmodul 2 und über die Dichtflächen 14 und 15 mit dem Endmodul 4 fluiddicht verbunden sind.

Die Filtermodule 3 A und 3 B weisen im Wesentlichen den Aufbau auf, wie dieser vorstehend im Zusammenhang mit der Figur 1 für das Filtermodul 3 beschrieben ist. Hier besteht jedoch der Unterschied zu dem Filtermodul 3 der Figur 1 dahingehend, daß bei dem Filtermodul 3 A (Figur 2) der erste Verbindungskanal 12 nicht durch einen eingepaßten Bolzen 12 b verschlossen ist, während bei dem Filtermodul 3 B (Figur 2) hier jedoch der erste Verbindungskanal 12 durch einen eingepaßten Bolzen 12 b abgesperrt ist, wie dies vorstehend für das Filtermodul 3 gemäß Figur 1 beschrieben ist. Desweiteren ist im Gegensatz zu dem zuvor beschriebenen Filtermodul 3 (Figur 1) bei dem in Figur 2 gezeigten Filtermodul 3 B der zweite Verbindungskanal 13 nicht durch einen Bolzen verschlossen, wie dies bei dem in Figur 1 beschriebenen Filtermodul 3 der Fall ist.

Die in Figur 2 gezeigte Ausführungsform arbeitet wie folgt:

Nachdem das Verteilungsmodul 2, die beiden Filtermodulen 3 A und 3 B sowie das Endmodul 4 über die entsprechenden Dichtflächen 14, 15, 16, 16 a, 16 b und 17 fluiddicht zusammengesetzt wird, wird die Vorrichtung derart im Strömungsweg des zu filtrierenden Fluids angeordnet, daß der erste Verbindungsbereich 18 zum Fluidzufuhrkanal und der zweite Verbindungsbereich 21 zum Fluidabfuhrkanal weist und hierüber fluiddicht damit verbunden ist.

Das in Pfeilrichtung 19 einströmende zu filtrierende Fluid gelangt zunächst über den Verteilungskanal 5 in den ersten Verbindungskanal 12 des ersten Filtermoduls 3 A sowie in den ersten Verbindungskanal 12 des zweiten Filtermoduls 3 B, wobei es dann entsprechend gleichmäßig auf die Fluidteilkanäle 6 der beiden Filtermodule 3 A und 3 B verteilt wird. In den Fluidteilkanälen 6 erfolgt dann über die dort vorgesehenen und zuvor im Zusammenhang mit der Figur 1 beschriebenen Filter 11 ein entsprechendes Filtrieren des Fluids, so daß das filtrierte Fluid dann am Auslaß des Fluidteilkanals 6 in den zweiten Verbindungskanälen 13 des Filtermoduls 3 A und des Filtermoduls 3 B gesammelt und hiernach in den Auslaßkanal 7 des Endmoduls 4 strömt. Von dort gelangt es über den zweiten Verbindungsbereich 21 zum Fluidabfuhrkanal (nicht gezeigt) und weiter zu einem nicht gezeigten Werkzeug oder einer nicht abgebildeten Düse.

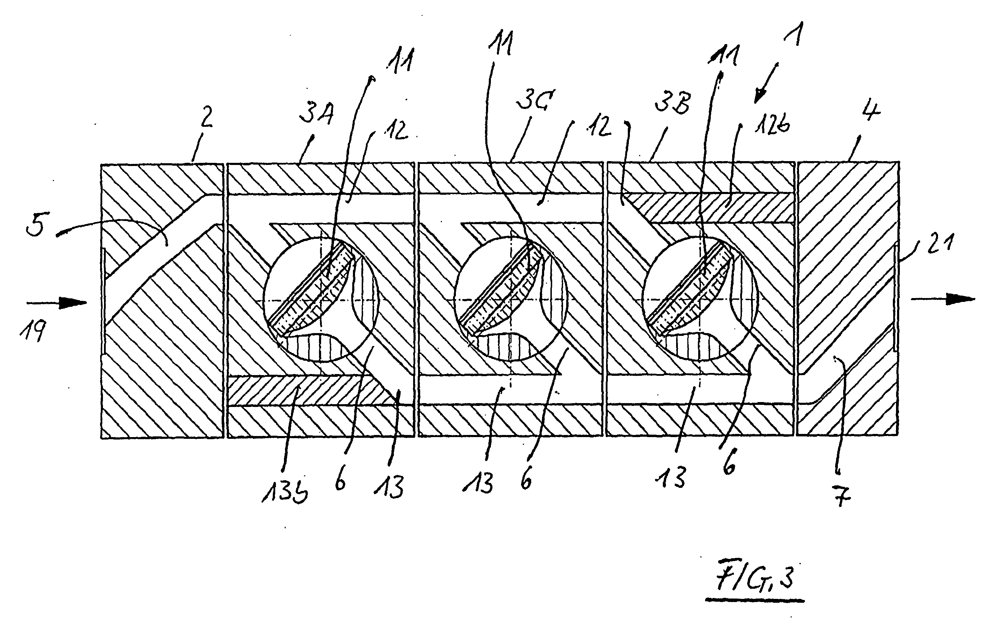

Die in Figur 3 gezeigte dritte Ausführungsform der Vorrichtung 1 unterscheidet sich von der Ausführungsform gemäß der Figur 2 dahingehend, daß bei der in Figur 3 gezeigten Ausführungsform drei Filtermodule 3 A, 3 B, 3 C vorhanden sind, die fluiddicht über entsprechende Dichtflächen miteinander sowie mit dem Verteilungsmodul 2 und dem Endmodul 4 verbunden sind. Hierbei ist der Aufbau des Verteilungsmoduls 2, des ersten Filtermoduls 3 A und des dritten Filtermoduls 3 B sowie des Endmoduls 4 so, wie dies anhand der Figur 2 vorstehend beschrieben ist.

Zusätzlich weist die in Figur 3 gezeigte Vorrichtung 1 ein mittleres Filtermodul 3 C auf, wobei das mittlere Filtermodul 3 C einen ersten oberen Verbindungskanal 12 sowie einen unteren zweiten Verbindungskanal 13 aufweist, wobei beide Verbindungskanäle nicht verschlossen sind.

Die in Figur 3 gezeigte Vorrichtung arbeitet so, wie dies vorstehend für die Vorrichtung gemäß Figur 2 beschrieben ist, wobei jedoch im Unterschied hierzu bei der in Figur 3 gezeigten Vorrichtung 1 das über den Verbindungskanal 5 in Pfeilrichtung 19 zugeführte zu filtrierende Fluid nicht nur auf zwei Filtermodule 3 A und 3 B sondern auf drei Filtermodule 3 A, 3 C und 3 B aufgeteilt wird, wobei für die Aufteilung dieses noch nicht filtrierten Fluids auf die drei Fluidteilkanäle 6 die in jedem Filtermodul vorhandenen ersten Verbindungskanäle 12 verwendet werden.

Das filtrierte Fluid wird dann stromab eines jeden Filters 11 in dem zweiten Verbindungskanal 13 eines jeden Filtermoduls gesammelt und gemeinsam zum Auslaßkanal 7 des Endmoduls 4 geführt, wobei es über den zweiten Verbindungsbereich 21 zum Fluidabfuhrkanal und von dort zu einem nicht gezeigten Werkzeug oder einer nicht gezeigten Düse strömt.

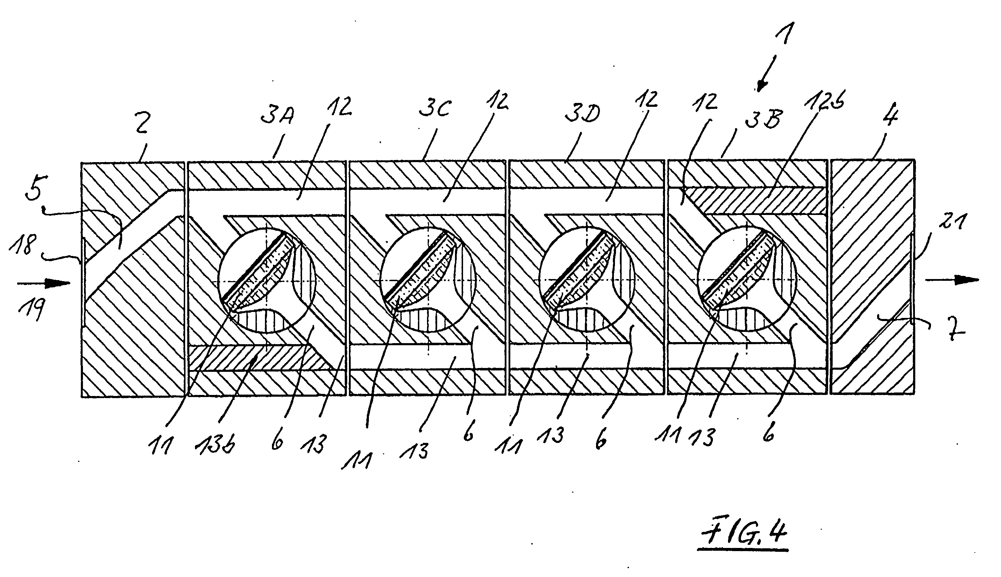

Die in Figur 4 abgebildete vierte Ausführungsform der Vorrichtung 1 ist wie die in Figur 3 gezeigte Ausführungsform gestaltet, jedoch mit dem Unterschied, daß hier anstelle von drei Filtermodulen vier Filtermodule 3 A, 3 C, 3 D und 3 B zwischen dem Verteilungsmodul 2 und dem Endmodul 4 angeordnet sind.

Die Filtermodule 3 A und 3 B sind so aufgebaut, wie dies vorstehend für die Filtermodule 3 A und 3 B (in Figur 2) beschrieben ist.

Die beiden mittelständigen Filtermodule 3 C und 3 D (Figur 4) weisen den Aufbau auf, wie dieser vorstehend im Zusammenhang mit der Figur 3 für das Filtermodul 3 C ausgeführt ist.

Die Funktion der in Figur 4 gezeigten vierten Ausführungsform entspricht der Funktion der vorstehend in Figur 3 beschriebenen dritten Ausführungsform der Vorrichtung 1, wobei jedoch bei der in Figur 4 gezeigten Ausführungsform eine Aufteilung des in Pfeilrichtung 19 zugeführten Fluids nicht nur auf drei Filtermodule sondern bei der vierten Ausführungsform auf vier Filtermodule erfolgt.

Die vorstehend beschriebenen und in den Figuren 1 bis 4 gezeigten Ausführungsformen der Vorrichtung weisen Filtermodule auf, die in Strömungsrichtung des zu filtrierenden Fluids gesehen alle hintereinander angeordnet sind. Diese Ausführungsformen werden dann verwendet, wenn ein hinreichend großer Abstand zwischen dem Fluidzufuhrkanal und dem Fluidabfuhrkanal besteht, so insbesondere ein hinreichend großer Abstand zwischen dem Extruder und einem hiervon entfernt angeordneten Werkzeug bzw. einer Düse, so daß dementsprechend durch eine derartige axiale Verlängerung der Fluidfiltervorrichtung 1 keine Probleme entstehen.

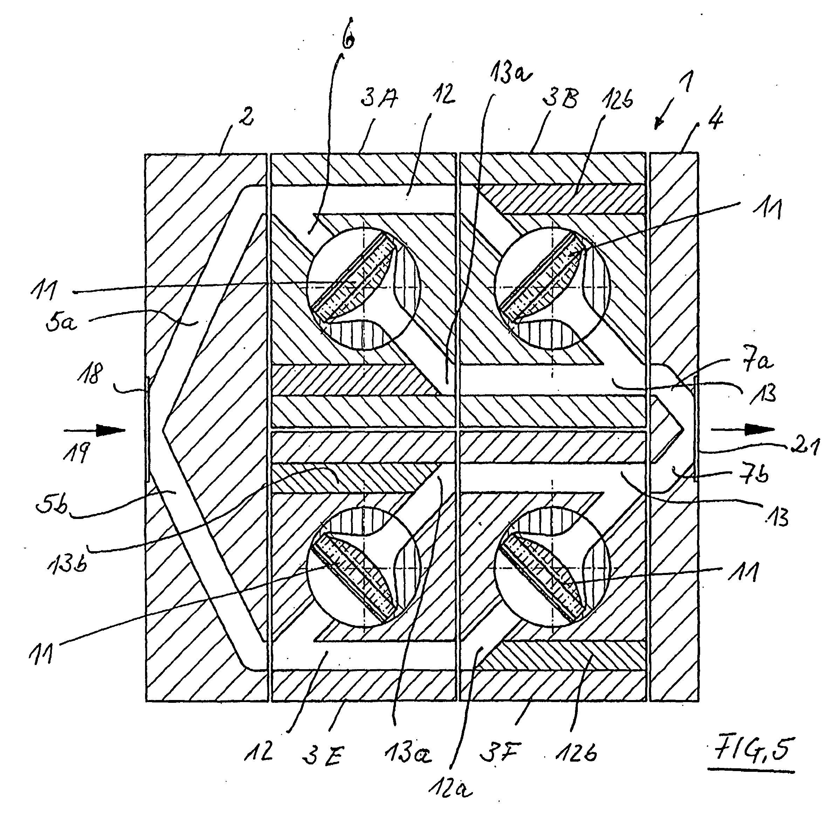

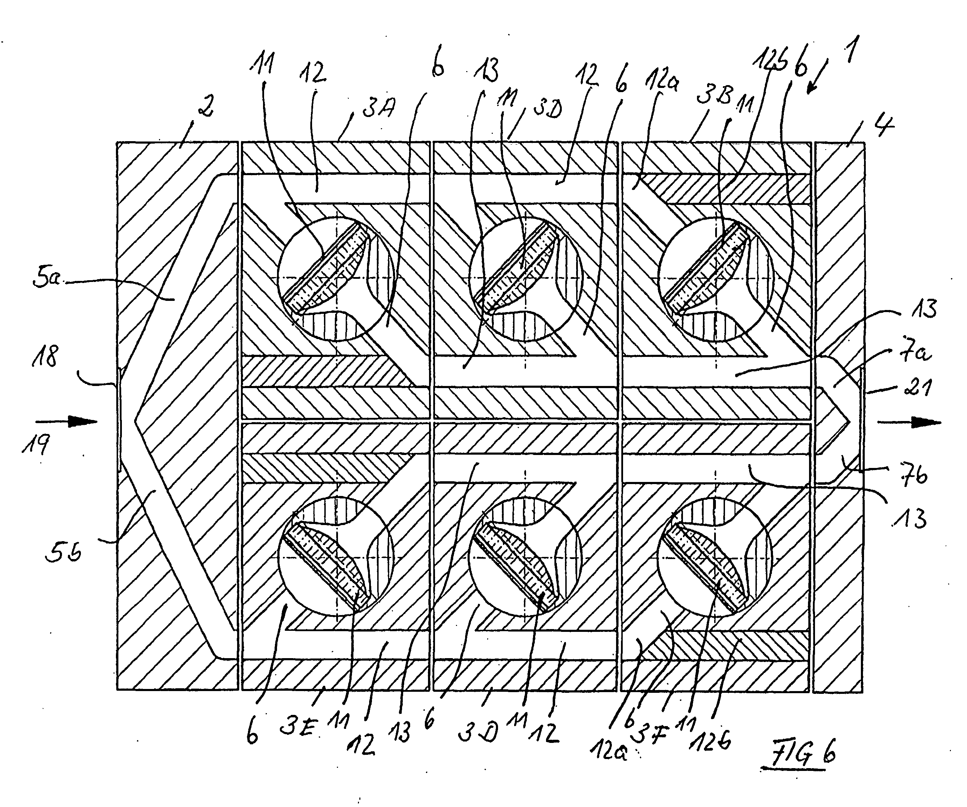

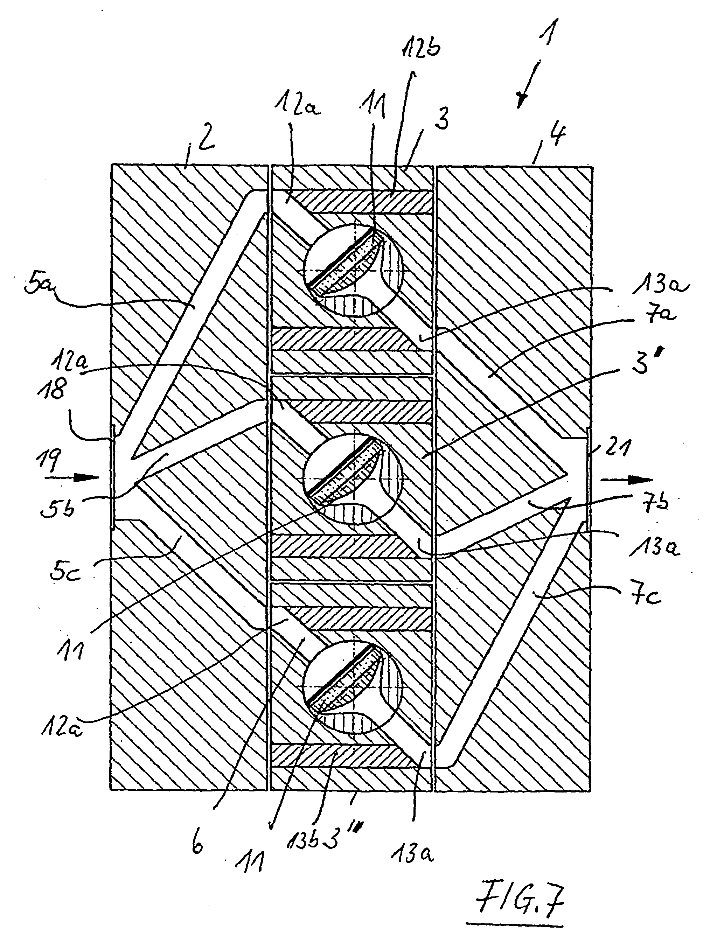

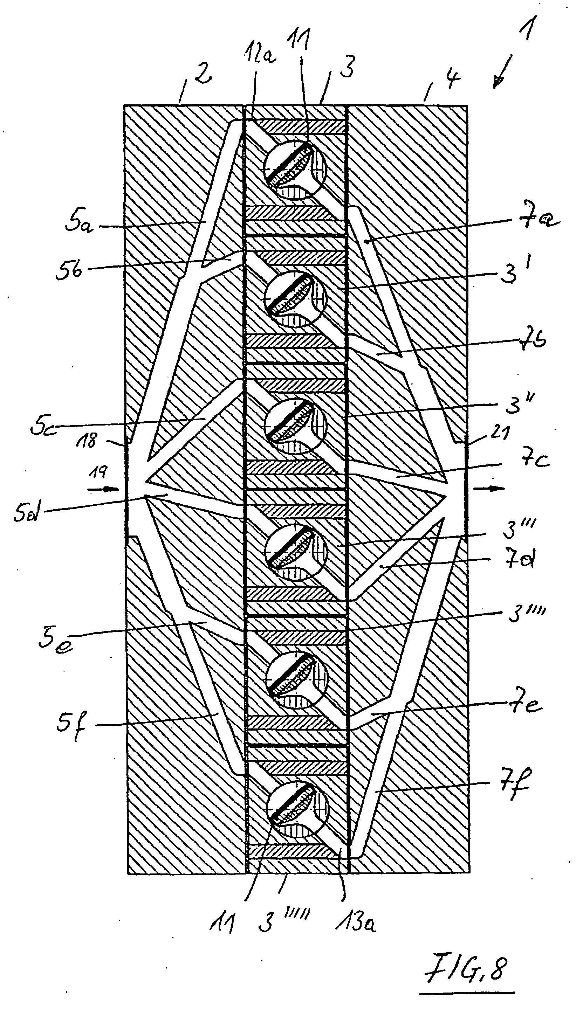

Steht jedoch zwischen dem Fluidzufuhrkanal und dem Fluidabfuhrkanal nur ein begrenzter Platz in axialer Richtung zur Verfügung, so werden solche Ausführungsformen der Vorrichtung verwendet, wie sie in den Figuren 5 und 6 gezeigt sind oder wie sie die Figuren 7 und 8 abbilden.

Die in Figur 5 dargestellte Ausführungsform der insgesamt mit 1 bezeichneten Vorrichtung weist, wie die zuvor beschriebenen Ausführungsformen, ein Verteilungsmodul 2 sowie ein Endmodul 4 auf, wobei zwischen dem Verteilungsmodul und dem Endmodul 4 vier Filtermodule 3 A, 3 B, 3 E und 3 F angeordnet sind.

Diese vier Filtermodule sind über entsprechende Dichtflächen, wie bereits vorstehend im Detail beschrieben, mit dem Endmodul 4 sowie mit dem Verteilungsmodul 2 als auch untereinander verbunden. Das Filtermodul 3 A und 3 B entspricht den Filtermodulen 3 A und 3 B, wie dieses vorstehend im Zusammenhang mit der vierten Ausführungsform (Figur 4) beschrieben ist.

Bei dem Filtermodul 3 E ist ein Abschnitt des zweiten Verbindungskanals 13 durch einen Bolzen 13 b verschlossen, so daß nur ein erster Abschnitt 13 a für das filtrierte Fluid zur Verfügung steht.

Bei dem Filtermodul 3 F ist ein hinterer Abschnitt des ersten Verbindungskanals 12 durch einen Bolzen 12 b ebenfalls verschlossen, so daß hier nur ein vorderer Abschnitt 12 a des ersten Verbindungskanals 12 vom Fluid durchströmt wird.

Ansonsten sind die Filtermodule 3 E und 3 F identisch aufgebaut.

Das in Figur 5 gezeigte Verteilungsmodul 2 weist im Gegensatz zu den zuvor anhand der Figuren 1 bis 4 beschriebenen Ausführungsformen zwei Verteilungskanäle 5 a sowie 5 b auf, während das Endmodul 4 ebenfalls zwei Auslaßkanäle 7 a und 7 b umfaßt.

Wird nunmehr die in Figur 5 gezeigte fünfte Ausführungsform der Vorrichtung 1 verwendet, so wird das zu filtrierende Fluid in Pfeilrichtung 19 zunächst in das Verteilungsmodul 2 eingeführt, wobei die Verteilungskanäle 5 a und 5 b für gleichmäßig große Fluidteilströme sorgen.

Von den Verteilungskanälen 5 a und 5 b gelangt das zu filtrierende Fluid über die ersten Verbindungskanäle 12 der oberen Filtermodule 3 A und 3 B sowie über die ersten Verbindungskanäle 12 der unteren Filtermodule 3 E und 3 F zu den Fluidteilkanälen 6, die in jedem Filtermodul 3 A, 3 B, 3 E und 3 F vorgesehen sind. Stromab der Filter 11 mündet dann das filtrierte Fluid in den zweiten Verbindungskanal 13 a bzw. 13, wobei die beiden Teilströme des filtrierten Fluids dann im Endmodul zu den Auslaßkanälen 7 a und 7 b geleitet werden. Über den zweiten Verbindungsbereich 21 gelangt dann das filtrierte Fluid zu dem Fluidabfuhrkanal (nicht gezeigt) bzw. zu einem hieran angeordneten Werkzeug oder Düse.

Die in Figur 6 gezeigte sechste Ausführungsform der Vorrichtung 1 unterscheidet sich von der zuvor in Figur 5 gezeigten fünften Ausführungsform dahingehend, daß bei der sechsten Ausführungsform sechs Filtermodule vorgesehen sind, die übereinander angeordnet und hintereinander geschaltet sind. Hierbei weist die sechste Ausführungsform (Figur 6) die bereits zuvor beschriebenen Filtermodule 3 A, 3 B, 3 E und 3 F auf, während zwischen den Filtermodulen 3 A und 3 B ein weiteres Filtermodul 3 D und zwischen den Filtermodulen 3 E und 3 F ein weiteres Filtermodul 3 D geschaltet ist, wobei diese beiden Filtermodule 3 D baugleich sind mit den Filtermodulen 3 C oder 3 D der zuvor im Zusammenhang mit der vierten Ausführungsform (Figur 4) beschriebenen Filtermodulen.

Das in Figur 6 gezeigte Verteilungsmodul 2 und das Endmodul 4 unterscheidet sich von der fünften Ausführungsform (Figur 5) nicht.

Die in den Figuren 7 und 8 gezeigten und nachfolgend noch beschriebenen Vorrichtungen 1 werden insbesondere dann angewandt, wenn der axiale Abstand zwischen dem Fluidzufuhrkanal und dem Fluidabfuhrkanal recht gering ist.

Die in der Figur 7 abgebildete siebte Ausführungsform der Vorrichtung 1 weist drei Filtermodule 3, 3' und 3'' auf, wobei die drei Filtermodule 3, 3' und 3'' zwischen einem Verteilungsmodul 2 und einem Endmodul 4 fluiddicht angeordnet sind. Hierbei besitzen diese Filtermodule 3, 3' und 3'' einen Aufbau, wie dieser im Zusammenhang mit der ersten Ausführungsform (Figur 1) vorstehend beschrieben ist.

Das Verteilungsmodul 2 der siebten Ausführungsform weist drei Verteilungskanäle 5 a, 5 b und 5 c und das Endmodul 4 weist drei Auslaßkanäle 7 a, 7 b und 7 c auf, wobei die Auslaßkanäle im Verbindungsbereich 21 zusammengefaßt sind. Entsprechendes gilt für den Mündungsbereich der Verteilungskanäle 5 a, 5 b und 5 c, die im ersten Verbindungsbereich 18 zusammengefaßt sind.

Das zu filtrierende Fluid wird in Pfeilrichtung 19 zugeführt und über die Verteilungskanäle 5 a, 5 b und 5 c des Verteilungsmoduls 2 auf drei gleichmäßige Teilströme aufgeteilt. Hiernach gelangt das so aufgeteilte Fluid zu den drei, identisch gebauten Filtermodulen, wobei die Verteilungskanäle 5 a, 5 b und 5 c das Fluid über den ersten Verbindungskanalabschnitt 12 a zu den Fluidteilkanälen 6 jeweils führen. Stromab der Filter 11 wird dann das gefilterte Fluid über vor dem zweiten Verbindungskanalabschnitt 13 a zum entsprechenden Auslaßkanal 7 a, 7 b bzw. 7 c geführt, wobei das filtrierte Fluid dann im zweiten Verbindungsbereich 21 in einem gemeinsamen Kanalabschnitt zusammengefaßt wird, um es hiernach über den zweiten Verbindungsbereich 21 zu einem hiernach nachgeschalten Fluidabfuhrkanal, einem Werkzeug bzw. einer Düse zu führen.

Die in Figur 8 gezeigte Ausführungsform unterscheidet sich von der siebten Ausführungsform (Figur 7) nur dahingehend, daß bei der Ausführungsform gemäß der Figur 8 nicht nur drei Filtermodule sondern sechs, identisch gebaute Filtermodule 3, 3', 3'', 3''', 3'''' und 3''''' vorgesehen sind. Ferner weist das Verteilungsmodul sechs Verteilungskanäle 5 a bis 5 f auf, während das Endmodul sechs Auslaßkanäle 7 a bis 7 f umfaßt. Die sechs Filtermodule sind übereinander angeordnet.

Bei gleichem axialen Abstand zwischen dem ersten Verbindungsbereich 18 und dem zweiten Verbindungsbereich 21 läßt sich somit, ausgehend von der siebten Ausführungsform, bei der achten Ausführungsform die Filterkapazität entsprechend vergrößern. Die in Figur 8 gezeigte achte Ausführungsform arbeitet so, wie dies vorstehend bei der Figur 7 beschrieben ist.

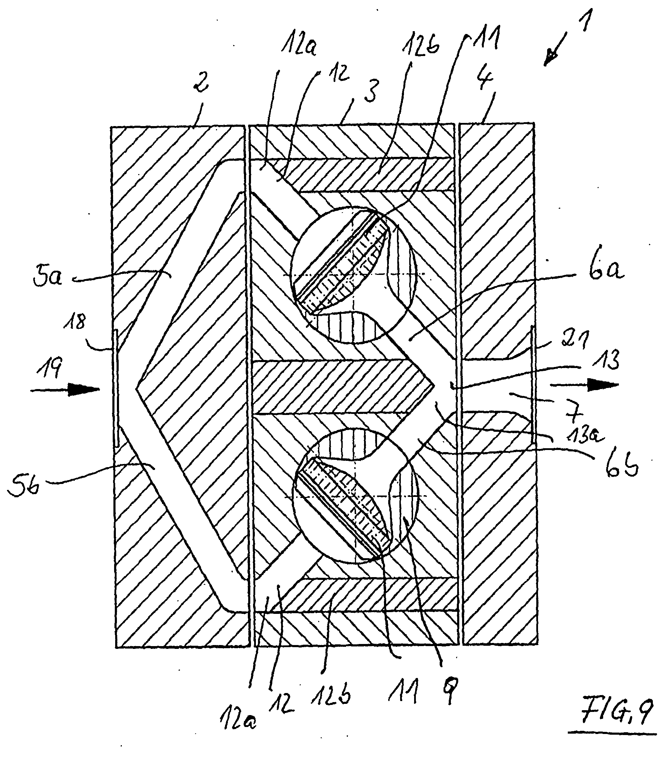

Die nachfolgend noch im Zusammenhang mit den Figuren 9 bis 13 beschriebenen neunten bis dreizehnten Ausführungsformen der Vorrichtung 1 unterscheiden sich von zuvor beschriebenen Ausführungsformen gemäß der Figuren 1 bis 8 zunächst dahingehend, daß bei der neunten bis dreizehnten Ausführungsform jedes Filtermodul nicht nur einen Fluidteilkanal sondern zwei Fluidteilkanäle aufweist.

Die in Figur 9 gezeigte neunte Ausführungsform stellt die einfachste Realisierung dieser Baureihe dar. Hierbei weist die neunte Ausführungsform ein Verteilungsmodul 2, ein Filtermodul 3 sowie ein Endmodul 4 auf, wobei das Verteilungsmodul 2 mit zwei Verteilungskanälen 5 a und 5 b versehen ist. Stromauf in Strömungsrichtung 19 des zu filtrierenden Fluids gesehen mündet der Verteilungskanal 5 a in einen ersten Abschnitt 12 a des ersten Verbindungskanals 12, während der untere Verteilungskanal 5 b ebenfalls in einen ersten Abschnitt 12 a eines unteren ersten Verbindungskanals 12 endet. Hier schließt sich dann in beiden Fällen der Fluidteilkanal 6 a bzw. 6 b des Filtermoduls 3 an, wobei in diesem Fluidteilkanal 6 a bzw. 6 b jeweils mindestens ein Filter 11 angeordnet ist, wobei sich der Aufbau nicht von dem Aufbau unterscheidet, wie dieser bereits ausführlich bei Figur 1 beschrieben ist.

Stromab der Filter 11 werden die Fluidteilkanäle 6 a und 6 b in einem Abschnitt 13 a des zweiten Verbindungskanals zusammengefaßt, wobei der zweite, gemeinsame Verbindungskanal 13 dann im gemeinsamen Auslaßkanal 7 des Endmoduls 4 mündet.

Wie bereits vorstehend mehrfach beschrieben ist, sind Abschnitte des ersten Verbindungskanals sowie Abschnitte des zweiten, gemeinsamen Verbindungskanals verschlossen, wobei hierzu ein entsprechend geformter Bolzen 12 b bzw. 13 b verwendet wird, der vorzugsweise eingepaßt ist und im Bedarfsfall wieder entfernt werden kann.

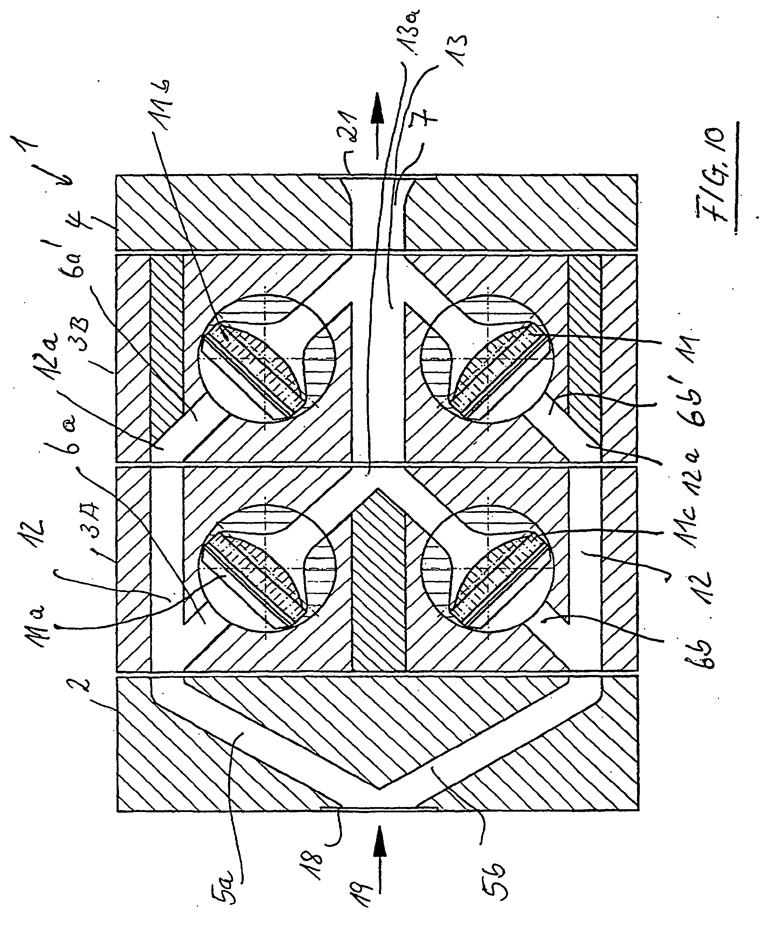

Die in Figur 10 gezeigte zehnte Ausführungsform der Vorrichtung 1 weist im Unterschied zu der zuvor beschriebenen neunten Ausführungsform (Figur 9) nicht nur ein Filtermodul sondern zwei Filtermodule auf, wobei diese Filtermodule mit 3 A und 3 B insgesamt bezeichnet sind.

Da das Verteilungsmodul 2 und das Endmodul 4 der in Figur 10 gezeigten zehnten Ausführungsform dem Verteilungsmodul 2 und dem Endmodul 4 der zuvor beschriebenen neunten Ausführungsform entspricht, wird zur Vermeidung von Wiederholungen auf die diesbezüglichen Ausführungen bei der Figur 9 verwiesen.

Das in Strömungsrichtung 19 (Pfeilrichtung) des zu filtrierenden Fluids gesehen erste Filtermodul 3 A besitzt jeweils einen oberen ersten Verbindungskanal 12 und einen unteren ersten Verbindungskanal 12, wobei zwischen diesen beiden Verbindungskanälen (oberer und unterer Verbindungskanal) vier Fluidteilkanäle 6 a und 6 b sowie 6 a' und 6 b' angeordnet sind. Über diese beiden Verbindungskanäle 12, 12 a erfolgt die Versorgung der Fluidteilkanäle 6 a, 6 b, 6 a' und 6 b', wobei das zu filtrierende Fluid diesen beiden ersten verbindungskanälen 12 über zwei Verteilungskanäle 5 a und 5 b des Verteilungsmoduls 2 zugeführt wird. Stromab der entsprechenden Filter 11, 11 a, 11 b und 11 c münden dann die Fluidteilkanäle 6 a, 6 b, 6 a' und 6 b' in einen gemeinsamen zweiten Verbindungskanal 13 a, 13, wobei der gemeinsame Verbindungskanal dann fluiddicht mit einem Auslaßkanal 7 des Endmoduls 2 verbunden ist.

Um ein unerwünschtes Verschmutzen der nicht verwendeten Abschnitte des ersten und zweiten Verbindungskanals zu verhindern, sind die entsprechenden Kanalabschnitte über eingepaßte Bolzen 12 b, 13 b fluiddicht verschlossen.

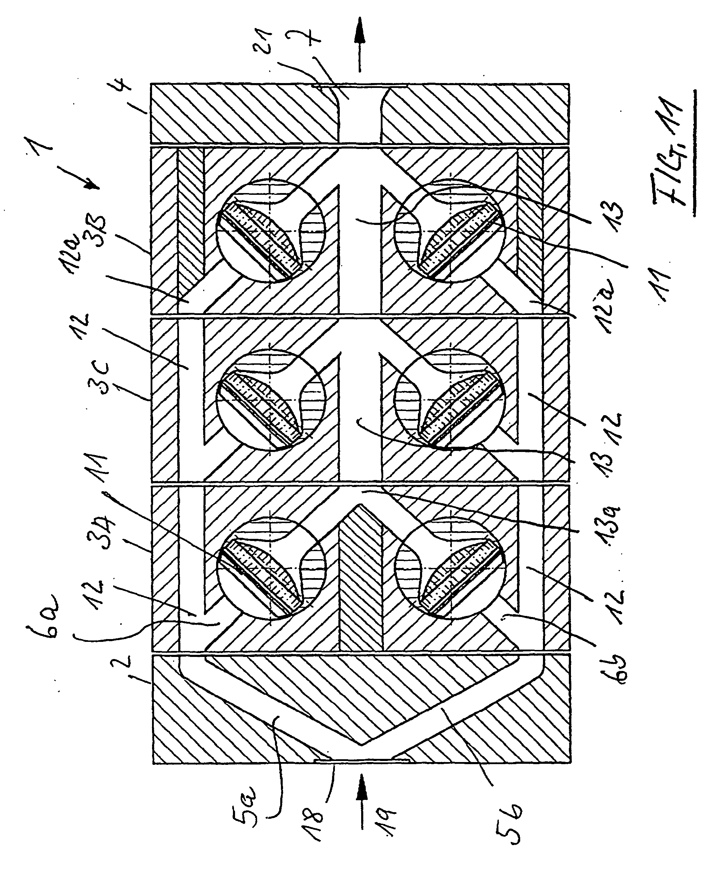

Die in Figur 11 gezeigte elfte Ausführungsform der Vorrichtung 1 unterscheidet sich von der zuvor beschriebenen zehnten Ausführungsform der Vorrichtung 1 dahingehend, daß bei der elften Ausführungsform der Vorrichtung 1 zusätzlich zwischen dem Filtermodul 3 A und dem Filtermodul 3 B ein dritter Filtermodul 3 C angeordnet ist, wobei dieses dritte Filtermodul 3 C im Prinzip so aufgebaut ist, wie dies vorstehend für die Filtermodule 3 A und 3 B beschrieben ist. Der einzige Unterschied zwischen den Filtermodulen 3 A bzw. 3 B und dem Filtermodul 3 C der Figur 11 besteht darin, daß das Filtermodul 3 C keine durch Bolzen verschlossene erste und zweite Verbindungskanalabschnitte besitzt, da hierbei der erste obere und der erste untere Verbindungskanal für die Versorgung des stromab angeordneten Filtermoduls 3 B und der zweite, gemeinsame Verbindungskanal 13 für die Entsorgung des vorgeschalteten Filtermoduls 3 A fluiddurchlässig sein muß. Ansonsten arbeitet die in Figur 11 gezeigte elfte Ausführungsform wie die bereits zuvor beschriebenen beiden Ausführungsformen gemäß der Figuren 9 und 10.

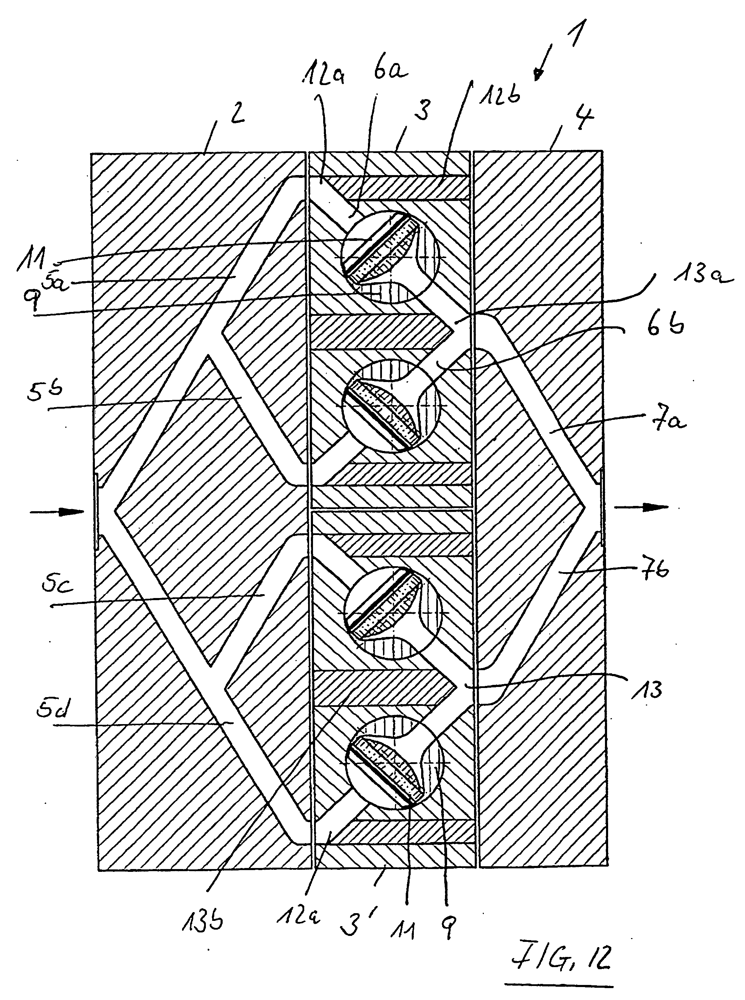

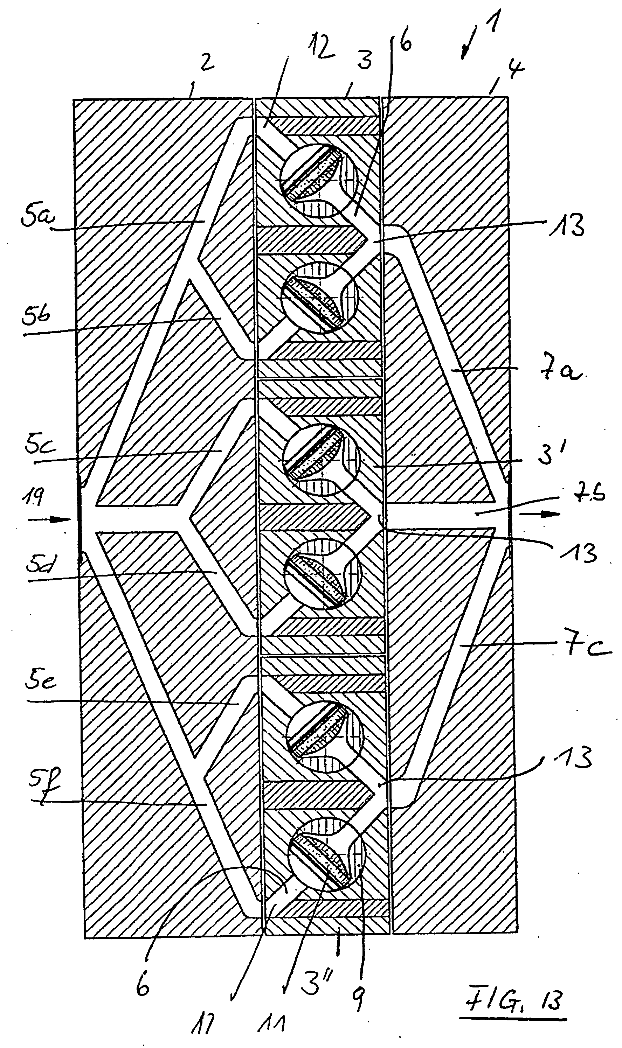

Vorstehend wurden drei Ausführungsformen in Verbindung mit den Figuren 9 bis 11 der Vorrichtung beschrieben, die dann eingesetzt werden, wenn der axiale Abstand zwischen dem ersten Verbindungsbereich 18 bzw. dem Fluidzufuhrkanal und dem zweiten Verbindungsbereich 21 bzw. dem Fluidabfuhrkanal nicht begrenzt ist. Ist jedoch dieser Abstand begrenzt, so finden solche Ausführungsformen der Vorrichtung 1 Anwendung, wie diese nachfolgend anhand der Figuren 12 und 13 beschrieben sind.

Die in Figur 12 gezeigte zwölfte Ausführungsform der Vorrichtung 1 weist zwei, übereinander angeordnete Filtermodule 3, 3' auf, wobei die beiden Filtermodule 3, 3' baugleich ausgestaltet sind und jeweils zwei Fluidteilkanäle 6 a und 6 b aufweisen. Innerhalb dieser Fluidteilkanäle 6 a bzw. 6 b sind entsprechende Filter in entsprechenden Bolzen 9 angeordnet, wie dies vorstehend ausführlich bei Figur 1 beschrieben ist. Stromauf der Filtermodule 3 bzw. 3' ist ein Verteilungsmodul 2 vorgesehen, wobei das Verteilungsmodul 2 über vier Verteilungskanäle 5 a bis 5 d verfügt. Diese Verteilungskanäle 5 a bis 5 d münden dann in einem Abschnitt 12 a eines oberen ersten Verbindungskanals 12 bzw. in einem Abschnitt 12 a eines unteren Verbindungskanals 12, wobei von hier aus dann das Fluid in die Fluidteilkanäle 6 a und 6 b eines jeden Filtermoduls geführt wird.

Stromab des Filters 11 werden dann die Fluidteilkanäle 6 a und 6 b in einem gemeinsamen zweiten Verbindungskanal 13 zusammengeführt, der wiederum seinerseits in den Auslaßkanal 7 a bzw. 7 b des Endmoduls endet. Die beiden Auslaßkanäle 7 a und 7 b sind dann vor dem zweiten Verbindungsbereich 21 zusammengefügt.

Um ein unerwünschtes Verschmutzen der nicht durchströmten Abschnitte der ersten und zweiten Verbindungskanäle 12 bzw. 13 zu verhindern, sind diese Abschnitte vorzugsweise durch eingepaßte Bolzen 12 b und 13 b verschlossen.

Die in Figur 13 gezeigte dreizehnte Ausführungsform der Vorrichtung 1 unterscheidet sich von der zuvor beschriebenen zwölften Ausführungsform der Vorrichtung 1 dahingehend, daß anstelle von zwei Filtermodulen bei der in Figur 13 gezeigten Ausführungsform drei Filtermodule 3, 3' und 3'' vorhanden sind. Hierbei weisen diese Filtermodul 3, 3' und 3'' den Aufbau auf, wie dieser vorstehend für die Filtermodule 3 und 3' der in Figur 12 gezeigten Ausführungsform beschrieben sind. Hingegen unterscheidet sich bei der in Figur 13 gezeigten Ausführungsform das Verteilungsmodul 2 von dem zuvor beschriebenen Verteilungsmodul dahingehend, daß bei der dreizehnten Ausführungsform (Figur 13) das Verteilungsmodul 2 sechs Verteilungskanäle 5 a bis 5 f und das Endmodul 4 drei Auslaßkanäle 7 a bis 7 c aufweist, wobei der Auslaßkanal 7 b ein gemeinsamer Auslaßkanal darstellt. Ansonsten entspricht der in Figur 13 gezeigte Aufbau der dreizehnten Ausführungsform der zuvor beschriebenen zwölften Ausführungsform (Figur 12).

Bei den zuvor beschriebenen und in den Figuren 1 bis 13 gezeigten Ausführungsformen der Vorrichtung 1 wurde nur allgemein das mindestens eine, in dem axialen Bolzen 9 angeordnete Filter 11 beschrieben, wobei zur konkreten Ausgestaltung dieses Bolzens und des mindestens einen Filters 11 vorstehend keine nähere Details beschrieben sind.

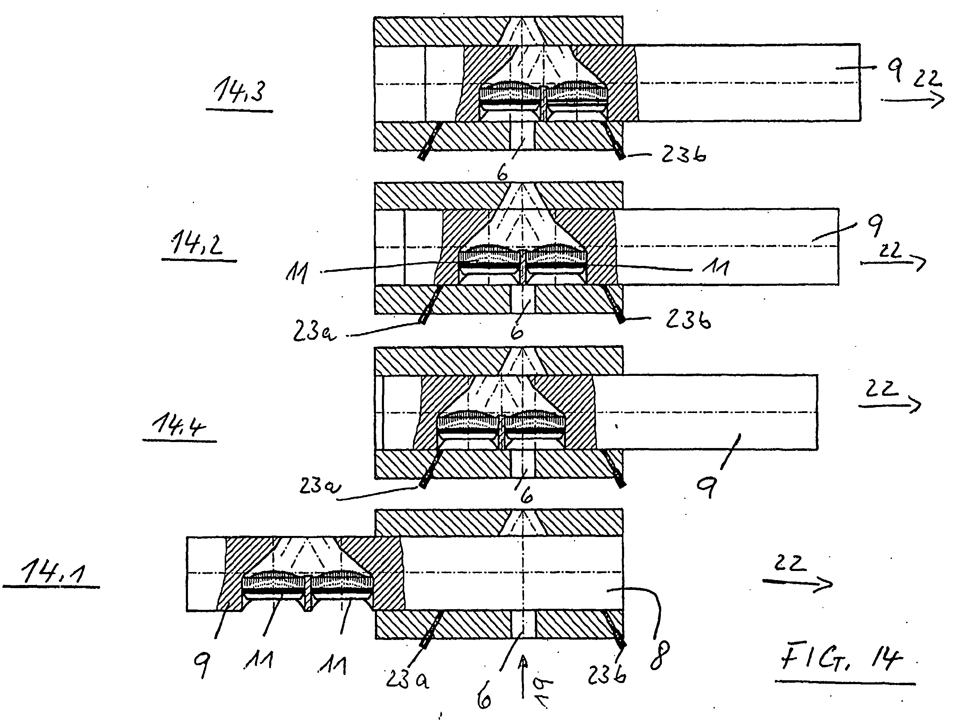

Die Figur 14 bildet eine Ausgestaltung des Bolzens 9 mit darin angeordneten Filtern 11 ab, wobei in der Figur 14 verschiedene Arbeitsstellungen des axial verschiebbaren Bolzens 9 wiedergegeben sind.

Hierbei entspricht die Figur 14, die die Figuren 14.1 bis 14.4 umfaßt, eine Schnittansicht längs der Linie A-B in Figur 1.

Wie bereits vorstehend beschrieben ist, ist der Bolzen 9, der bei der in Figur 14 gezeigten Ausführungsform zwei Filter 11 haltert, axial innerhalb einer Gehäusebohrung 8 in Pfeilrichtung 22 und umgekehrt hierzu verschiebbar.

Der Bolzen 9 ist senkrecht zur Strömungsrichtung des Fluids im Fluidteilkanal 6 angeordnet, wobei die Strömungsrichtung des Fluids mit 19 (Pfeilrichtung) gekennzeichnet ist.

Bis zur Bohrung 8, die die axiale Verschiebung des Bolzens 9 fluiddicht lagert, erstreckt sich links und rechts vom Fluidteilkanal 6 jeweils ein Ablaßelement 23 a bzw. 23 b, wobei das Ablaßelement 23 a bzw. 23 b abhängig von der Stellung des Bolzens 9 entweder insgesamt verschlossen oder wahlweise das Ablaßelement 23 a oder das Ablaßelement 23 b zur Atmosphäre hin geöffnet ist.

Die Figur 14.1 bildet eine Stellung des Bolzens 9 ab, bei der die vom Bolzen gehalterten beiden Filter 11 außerhalb des Gehäuses des Filtermoduls positioniert sind, so daß diese beiden Filter 11 von außen zugänglich und ausgetauscht werden können.

Durch eine axiale Verschiebung des Bolzens 9 in Pfeilrichtung 22 nach rechts gelangt der Bolzen 9 in eine Stellung, wie diese in Figur 14.2 abgebildet ist. In dieser in Figur 14.2 gezeigten Stellung sind die beiden Ablaßelemente 23 a und 23 b durch den Bolzen 9 selbst verschlossen, während beide Filter 11 senkrecht zur Strömungsrichtung 19 des Fluids im Fluidteilkanal ausgerichtet sind. In dieser Arbeitsstellung, die auch vorstehend als erste Stellung bezeichnet ist, wird das über den Fluidteilkanal 6 in Pfeilrichtung 19 zugeführte Fluid von beiden Filtern 11 gleichzeitig filtriert, so daß stromab der Filter 11 dann das filtrierte Fluid über den stromab des Bolzens 9 angeordneten Abschnitt des Fluidteilkanals abgeführt wird.

Wird nunmehr festgestellt, daß beispielsweise das rechte Filter (Figur 14.2) mit Schmutz beladen ist, so wird der Bolzen 9 axial in die Position bewegt, wie diese in Figur 14.3 abgebildet ist. In dieser Position wird nur noch über das linke Filter 11 das in Pfeilrichtung 19 zugeführte Fluid filtriert, während das rechte Filter von der Fluidzufuhr abgesperrt ist.

Bedingt dadurch, daß sich in der in der Figur 14.3 gezeigten Position des Bolzens 9 im Raum stromab der Filter 11 ein Gegendruck aufbaut, wird ein Teilstrom des filtrierten Fluids entgegengesetzt zur Pfeilrichtung 19 durch das rechte Filter 11 geführt, sobald das Ablaßelement 23 b zur Atmosphäre hin geöffnet ist.

Nach erfolgter Rückspülung oder Regenerierung des rechten Filters 11 kann, sofern dies erforderlich ist, das linke Filter 11 von abgeschiedenen Schmutzpartikeln befreit werden. Hierzu wird der Bolzen 9 axial entgegengesetzt zur Pfeilrichtung 22 verschoben, wobei diese Position dann in der Figur 14.4 schematisch abgebildet ist. In dieser Position erfolgt eine Filtrierung des Fluids über das rechte Filter, wobei ein Teilstrom des filtrierten Fluids entgegengesetzt zur Pfeilrichtung 19 durch das linke Filter 11 strömt, sobald das Ablaßelement 23 a zur Atmosphäre hin geöffnet ist. Nach erfolgter Rückspülung bzw. Regenerierung des linken Filters wird dann der Bolzen erneut axial in Pfeilrichtung 22 verschoben, so daß er in eine Arbeitsstellung gelangt, in der beide Filter 11 filtrieren, wobei diese Arbeitsstellung in Figur 14.2 gezeigt ist.

Wahlweise können die Ablaßelemente 23 a und 23 b als Durchtrittskanäle ausgebildet sein, so daß der mit Schmutz beladene Fluidteilstrom dann abgeführt wird, sobald durch eine axiale Verschiebung des Bolzens 9 dieser in eine Position gelangt, wie diese in den Figuren 14.3 oder 14.4 gezeigt ist. Besonders geeignet ist es jedoch, wenn diese Ablaßelemente 23 a und 23 b jeweils mit einem Ventil versehen sind, durch das die abgelassene Menge an Fluid einstellbar ist.

Darüber hinaus besteht die Möglichkeit, den Bolzen so auszugestalten, daß dieses nur ein Filter haltert. Ebenso können eine Vielzahl von Filtern vorgesehen sein, wie dies im Prinzip in der Figur 1 der DE 15 54 913 beschrieben ist.

Der zuvor in Verbindung mit der Figur 14 beschriebene Bolzen 9 vereinigt somit das Absperrelement und das Ablaßelement in einem einzigen Bolzen und ermöglicht ein individuelles Rückspülen eines jeden Filters.

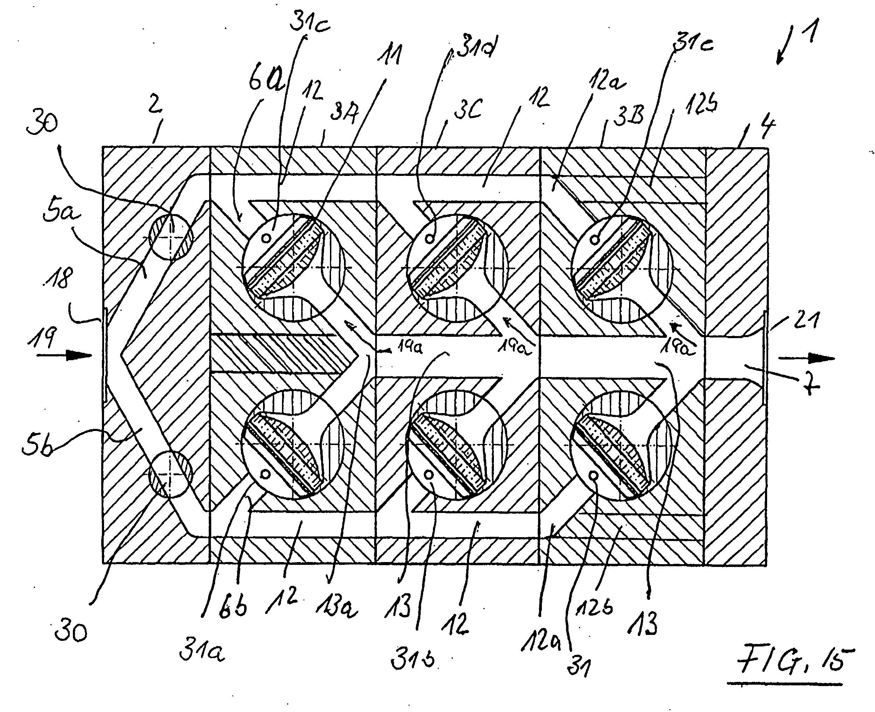

In Figur 15 ist eine weitere Ausgestaltung der Vorrichtung 1 abgebildet, wobei die in Figur 15 gezeigte weitere Ausgestaltung bezüglich der Anordnung des Verteilungsmoduls 2, der Filtermodule 3 und des Endmoduls 4 der Ausführungsform entspricht, wie sie vorstehend in Verbindung mit der Figur 11 im Detail beschrieben ist. Von daher wird darauf verzichtet, die diesbezüglichen Ausführungen zu wiederholen, so daß stattdessen auf die entsprechenden Ausführungen zur Figur 1 verwiesen wird.

Der Unterschied von der in Figur 15 gezeigten vierzehnten Ausführungsform zu der in Figur 11 gezeigten elften Ausführungsform liegt darin, daß im Verteilungskanal 5 a und im Verteilungskanal 5 b des Verteilungsmoduls 2 jeweils ein Absperrelement 30 angeordnet ist, wobei bei der in Figur 15 gezeigten Stellung diese Sperrelemente 30 weder den Fluidfluß im Verteilungskanal 5 a noch den Fluidfluß im Verteilungskanal 5 b behindern.

Durch eine Drehung oder insbesondere durch eine axiale Verschiebung des als Bolzen ausgebildeten Sperrelementes 30 läßt sich der Fluidzufluß zu den Filtermodulen wahlweise im Verteilungskanal 5 a oder im Verteilungskanal 5 b absperren, so daß dementsprechend bei einer Absperrung des Verteilungskanals 5 a die oberen drei ersten Verbindungskanäle 12 oder bei einer Absperrung des unteren Verteilungskanals 5 b die unteren ersten Verbindungskanäle 12 nicht mehr mit Fluid versorgt werden.

Stromauf des Filters 11 weist jeder Bolzen ein Ablaßelement 31, 31 a, 31 b, 31 c, 31 d und 31 e auf, wobei das Ablaßelement 31 bis 31 e in eine geöffnete Stellung überführt werden kann und somit eine Verbindung zur Atmosphäre hin geöffnet wird.

Soll nunmehr bei der in Figur 15 gezeigten Ausführungsform die obere Reihe der Filter 11 rückgespült werden, was immer dann erwünscht ist, wenn die diesbezüglichen Filter mit Schmutzpartikeln beladen sind, wird das dem Verteilungskanal 5 a zugeordnete Sperrelement 30 aus seiner geöffneten Stellung in eine geschlossene Stellung überführt. Gleichzeitig werden die Ablaßelemente 31 c bis 31 e geöffnet, so daß hierüber ein Weg zur Atmosphäre hin besteht. Bedingt dadurch, daß nach wie vor filtriertes Fluid über die untere Reihe der Filter in Pfeilrichtung 19 den Auslaßkanal des Endmoduls verläßt und daß hier insbesondere bei viskosen Flüssigkeiten, so beispielsweise Kunststoffschmelzen, ein Gegendruck aufgebaut wird, strömt ein Teilstrom dieses filtrierten Fluids in Pfeilrichtung 19 a durch die den oberen Filtern zugeordneten Fluidteilkanälen 6, so daß dieser Fluidteilstrom dann die Schmutzpartikel von den entsprechenden Filtern entfernt und über die geöffneten Ablaßelemente 31 c bis 31 e zur Atmosphäre hin abgeführt wird. Nach erfolgter Reinigung der Filter werden dann die Ablaßelemente 31 c bis 31 e wieder geschlossen und das Sperrelement 30 des Verteilungskanal 5 a geöffnet, so daß wieder alle Filter zum Filtrieren zur Verfügung stehen.

Die Regenerierung bzw. Rückspülung der unteren Reihe der Filter erfolgt analog, wobei zu diesem Zweck das dem Verteilungskanal 5 b zugeordnete Sperrelement 30 abgesperrt und die Ablaßelemente 31 bis 31 b geöffnet werden.

Die konkrete Ausgestaltung des Sperrelementes 30 sowie des Ablaßelementes 31 bis 31 e ist im Detail in der europäischen Patentanmeldung 0 672 443, insbesondere in den Figuren 9 und 10, abgebildet und beschrieben.

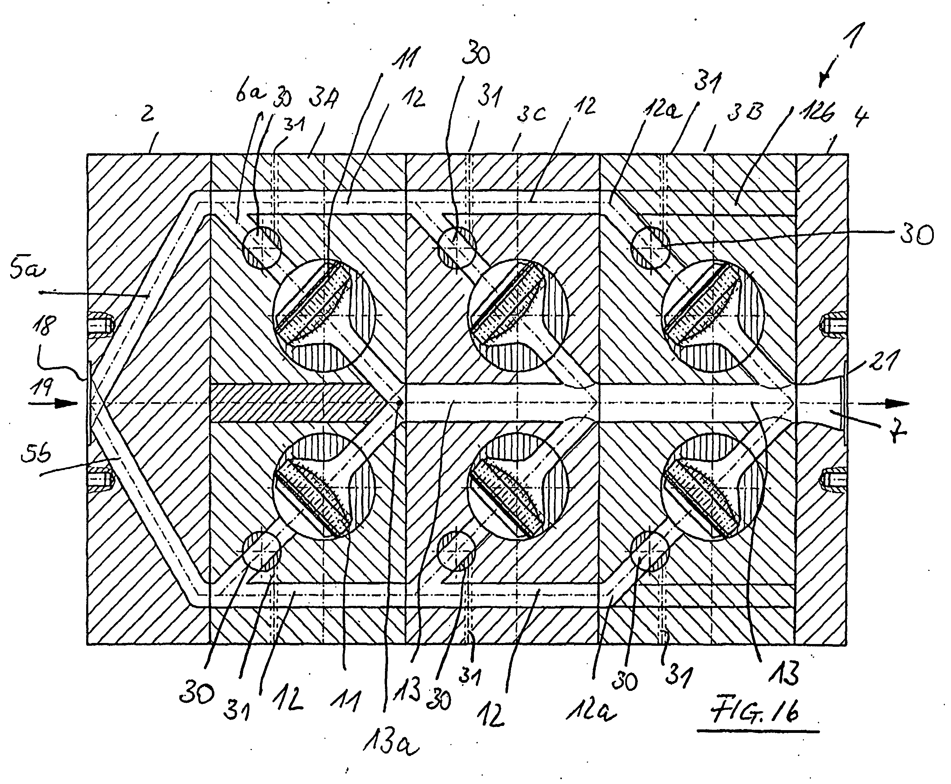

Die Figur 16 bildet eine weitere Ausgestaltung der Vorrichtung 1 ab, wobei sich diese Ausgestaltung der Figur 16 bezüglich ihrer modulen Bauweise nicht von der zuvor beschriebenen Ausführung sowie der Ausführung gemäß Figur 11 unterscheidet.

Im Unterschied zu der zuvor beschriebenen Ausführungsform ist die in Figur 16 gezeigte Ausgestaltung jedoch dahingehend verändert, daß jedem Fluidteilkanal 6 a stromauf des Filters ein separates Sperrelement 30 zugeordnet ist, wobei dieses Sperrelement 30 mit einem Ablaßelement 31 integriert ist, daß zur Atmosphäre hin geöffnet werden kann.

Wahlweise kann bei der in Figur 16 gezeigten Ausführungsform ein Filter bis zu fünf Filtern durch eine Überführung des diesen Filtern zugeordneten Sperrelementes in eine geschlossene Stellung rückgespült bzw. regeneriert werden, was dazu führt, daß die Zufuhr an zu filtrierendem Fluid zu diesem Filter bzw. zu diesen Filtern unterbrochen wird. Bedingt dadurch, daß zumindestens noch ein Filter nicht von der Fluidzufuhr des zu filtrierenden Fluids abgesperrt ist, baut sich hier auch ein entsprechender Gegendruck auf, der wiederum bewirkt, daß bereits filtriertes Fluid entgegengesetzt zur Filtrierrichtung den jeweils abgesperrten Fluidteilkanal bzw. die jeweils abgesperrten Fluidteilkanäle durchströmt und somit das hierin angeordnete Filter bzw. die hierin angeordneten Filter rückspült, so daß dementsprechend mit Schmutzpartikeln beladenes Fluid dann über das individuelle Ablaßelement zur Atmosphäre hin abgeführt wird. Auf diese Art und Weise lassen sich gezielt einzelne Filter rückspülen, ohne daß dabei die Zufuhr an filtriertem Fluid zum Fluidabfuhrkanal unterbrochen werden muß.

Ein derartiges kontinuierliches Rückspülen, bei dem somit ein Teilstrom des filtrierten Fluids zum Rückspülen des jeweiligen Filters und der verbleibende Teilstrom zur Zuführung in den Fluidabfuhrkanal herbeigeführt wird, erlauben auch die zuvor in Verbindung mit den Figuren 14 und 15 beschriebenen Ausführungsformen. Dies ist insbesondere deswegen vorteilhaft, da hierbei nicht eine Unterbrechung des Produktionsflusses auftritt.

Eine besonders kompakte Bauweise erlaubt eine Modifizierung der zuvor beschriebenen Ausführungsformen, bei denen das Endmodul nur einen einzigen Auslaßkanal aufweist. Hier ist es sogar möglich, auf diese Endmodul zu verzichten, wobei dann der gemeinsame zweite Verbindungskanal 13 endseitig den Verbindungsbereich 21 aufweist oder direkt an den Fluidabfuhrkanal angeschlossen wird.

Bei alle den zuvor anhand der Zeichnungen beschriebenen Ausführungsformen ist der Fluidteilkanal 6 relativ zur Dichtungsfläche unter einem Winkel α von 45° angeordnet, während die ersten und zweiten Verbindungskanäle parallel zueinander und senkrecht zu der Dichtfläche ausgerichtet sind.

## Patentansprüche

1. Vorrichtungtung (1) zum Filtrieren eines Fluidstromes, insbesondere zum Filtrieren einer Kunststoffschmelze, mit mindestens einem Fluidzufuhrkanal oder einem ersten Verbindungsbereich (18) zum Anschluß an einen vorhandenen Fluidzufuhrkanal und mindestens einem Fluidabfuhrkanal oder einem zweiten Verbindungsbereich (21) zum Anschluß an einen vorhandenen Fluidabfuhrkanal, wobei der Fluidzufuhrkanal bzw. der erste Verbindungsbereich (18) mit dem Fluidabfuhrkanal bzw. mit dem zweiten Verbindungsbereich (21) über mindestens einen Fluidteilkanal verbunden ist und der Fluidteilkanal (6, 6a, 6b) mindestens ein, in Strömungsrichtung des zu filtrierenden Fluids gesehen im Wesentlichen senkrecht hierzu ausgerichtetes Filter (11) aufweist, das von einem senkrecht zum Fluidteilkanal (6, 6a, 6b) ausgerichteten, axial verschiebbaren Bolzen (9) gehaltert ist, **dadurch gekennzeichnet, daß** die Vorrichtung (1) eine module Bauweise aufweist, bei der in Strömungsrichtung (19) des zu filtrierenden Fluids gesehen ein Verteilungsmodul (2), mindestens ein mit dem Fluidteilkanal (6, 6 a, 6 b) versehenes Filtermodul (3, 3 A bis 3 F, 3' bis 3''''') und ein Endmodul (4) miteinander lösbar verbunden sind, daß das Verteilungsmodul (2) mindestens einen Verteilungskanal (5, 5 a bis 5 f) aufweist, der den Fluidzufuhrkanal bzw. den ersten Verbindungsbereich (18) mit dem Fluidteilkanal (6, 6 a, 6 b) verbindet und daß das Endmodul (4) mit mindestens einem Auslaßkanal (7, 7 a bis 7 f) versehen ist, wobei sich der Auslaßkanal (7, 7 a bis 7 f) zwischen dem Fluidteilkanal (6, 6 a, 6 b) und dem Fluidabfuhrkanal bzw. dem zweiten Verbindungsbereich (21) erstreckt.

2. Vorrichtung nach Anspruch 1, **dadurch gekennzeichnet, daß** die Vorrichtung (1) eine Vielzahl von nebeneinander und/oder übereinander angeordneten Filtermodulen (3, 3 A bis 3 F, 3 ' bis 3'''''), insbesondere zwei bis zehn Filtermodule (3, 3 A bis 3 F, 3 ' bis 3'''''), aufweist, daß das Verteilungsmodul (2) eine der Anzahl der Filtermodule (3, 3 A bis 3 F, 3 ' bis 3''''') entsprechende Anzahl von Verteilungskanälen (5, 5 a bis 5 f) und daß das Endmodul (4) eine der Zahl der Filtermodule (3, 3 A bis 3 F, 3 ' bis 3''''') entsprechende Anzahl von Auslaßkanälen (7, 7 a bis 7 f) besitzt.

3. Vorrichtung nach Anspruch 1, **dadurch gekennzeichnet, daß** die Vorrichtung (1) eine Vielzahl von in Strömungsrichtung (19) des zu filtrierenden Fluids gesehen hintereinander angeordneten Filtermodulen (3, 3 A bis 3 F, 3 ' bis 3'''''), insbesondere zwei bis zehn Filtermodule (3, 3 A bis 3 F, 3 ' bis 3'''''), aufweist, daß das Verteilungsmodul (2) einen einzigen Verteilungskanal (5) und daß das Endmodul (4) einen einzigen Auslaßkanal (7) besitzt, daß mit Ausnahme des unmittelbar an das Verteilungsmodul (2) und des unmittelbar an das Endmodul (4) angeordneten Filtermoduls jedes weitere Filtermodul (3, 3 A bis 3 F, 3 ' bis 3''''') stromauf des Filters (11) einen ersten Verbindungskanal (12) und stromab des Filters (11) einen zweiten Verbindungskanal (13) aufweist, daß das unmittelbar an das Verteilungsmodul (2) angrenzende Filtermodul nur den ersten Verbindungskanal (12) und das unmittelbar an das Endmodul (4) angrenzende Filtermodul nur den zweiten Verbindungskanal (13) aufweist, wobei der erste und zweite Verbindungskanal (12, 13) derart angeordnet sind, daß der erste Verbindungskanal (12) eines jeden Filtermoduls stromauf des Filters (11) eine Fluidverbindung zwischen dem Verteilungskanal (5) und dem Fluidteilkanal (6) und der zweite Verbindungskanal (13) stromab des Filters (11) eine Fluidverbindung zwischen dem Fluidteilkanal (6) und dem Auslaßkanal (7) des Endmoduls (4) herstellt.

4. Vorrichtung nach Anspruch 3, **dadurch gekennzeichnet, daß** die ersten Verbindungskanäle (12) und/oder die zweiten Verbindungskanäle (13) von benachbarten Filtermodulen (3, 3 A bis 3 F, 3 ' bis 3''''') über aneinanderstoßende Dichtflächen (16, 16 a) fluiddicht miteinander verbunden sind.

5. Vorrichtung nach Anspruch 3 oder 4, **dadurch gekennzeichnet, daß** der erste Verbindungskanal (12) parallel zum zweiten Verbindungskanal (13) ausgerichtet ist.

6. Vorrichtung nach einem der vorangehenden Ansprüche, **dadurch gekennzeichnet, daß** das Verbindungsmodul (2) und das Endmodul (4) jeweils eine Dichtfläche (14, 17) zur fluiddichten Verbindung mit einem Filtermodul ((3, 3 A bis 3 F, 3 ' bis 3''''') aufweist.

7. Vorrichtung nach einem der vorangehenden Ansprüche, **dadurch gekennzeichnet, daß** jedes Filtermodul (3, 3 A bis 3 F, 3 ' bis 3''''') eine erste Dichtfläche (15, 16 a) und eine zu dieser entgegengesetzt angeordnete zweite Dichtfläche (16, 16 b) besitzt und daß jeweils zwei Filtermodule über einander zugeordnete Dichtflächen miteinander lösbar verbindbar sind oder daß ein Filtermodul über die erste Dichtfläche (16) mit der am Verteilungsmodul (2) vorgesehenen Dichtfläche (17) und über die zweite Dichtfläche (15) über die am Endmodul (4) vorgesehene Dichtfläche (14) fluiddicht und lösbar verbindbar ist.

8. Vorrichtung nach Anspruch 7, **dadurch gekennzeichnet, daß** die erste Dichtfläche und die zweite Dichtfläche im Wesentlichen parallel zueinander ausgerichtet sind.

9. Vorrichtung nach Anspruch 7 oder 8, **dadurch gekennzeichnet, daß** der Fluidteilkanal (6, 6 a, 6 b) unter einem Winkel α zwischen 30° und 65° geneigt zur Dichtfläche (15, 16, 16 a, 16 b) ausgestaltet ist.

10. Vorrichtung nach einem der Ansprüche 3 bis 9, **dadurch gekennzeichnet, daß** sich der erste Verbindungskanal (12) und der zweite Verbindungskanal (13) im Wesentlichen senkrecht zur Dichtfläche (15, 16, 16 a, 16 b) erstreckt.

11. Vorrichtung nach einem der vorangehenden Ansprüche, **dadurch gekennzeichnet, daß** die Vorrichtung (1) eine Vielzahl von Filtermodulen ((3, 3 A bis 3 F, 3 ' bis 3''''') aufweist und daß die Fluidteilkanäle (6, 6 a, 6 b) parallel zueinander ausgerichtet sind.

12. Vorrichtung nach einem der vorangehenden Ansprüche, **dadurch gekennzeichnet, daß** die einzelnen Filtermodule (3, 3 A bis 3 F, 3 ' bis 3''''') baugleich ausgebildet sind.

13. Vorrichtung nach einem der vorangehenden Ansprüche, **dadurch gekennzeichnet, daß** das Verteilungsmodul (2) den ersten Verbindungsbereich (18) zum Anschluß an einen vorhandenen Fluidzufuhrkanal und/oder das Endmodul (4) den zweiten Verbindungsbereich (21) zum Anschluß an einen vorhandenen Fluidabfuhrkanal aufweist.

14. Vorrichtung nach einem der vorangehenden Ansprüche, **dadurch gekennzeichnet, daß** jedes Filtermodul ((3, 3 A bis 3 F, 3 ' bis 3''''') einen einzigen Fluidteilkanal mit einem einzigen, axial verschiebbaren Bolzen (9) aufweist.

15. Vorrichtung nach einem der Ansprüche 1 bis 13, **dadurch gekennzeichnet, daß** jedes Filtermodul (3, 3 A, 3 B, 3 C, 3' bis 3'') zwei Fluidteilkanäle (6 a, 6 b) aufweist, wobei jeder Fluidteilkanal (6 a, 6 b) mit jeweils einem axial verschiebbaren Bolzen (9) versehen ist.

16. Vorrichtung nach Anspruch 15, **dadurch gekennzeichnet, daß** die beiden Fluidteilkanäle (6 a, 6 b) eines jeden Filtermoduls (3, 3 A, 3 B, 3 C, 3' bis 3'') stromab des Bolzens (9) in einen gemeinsamen zweiten Verbindungskanal (13) münden, während jeweils ein erster Verbindungskanal (12) an jeweils einen Fluidteilkanal (6 a, 6 b) stromauf des Bolzens (9) angeschlossen ist.

17. Vorrichtung nach Anspruch 16, **dadurch gekennzeichnet, daß** der gemeinsame zweite Verbindungskanal (13) parallel zu beiden ersten Verbindungskanälen (12) ausgerichtet ist.

18. Vorrichtung nach einem der vorangehenden Ansprüche, **dadurch gekennzeichnet, daß** das Endmodul (4) ebenfalls als Filtermodul ausgebildet ist.

19. Vorrichtung nach Anspruch 18, **dadurch gekennzeichnet, daß** der Auslaßkanal (7) des Endmoduls (4) den zweiten Verbindungskanal (13) ausbildet, der endseitig in Strömungsrichtung (19) des filtrierten Fluids gesehen den zweiten Verbindungsbereich (21) zum Anschluß an einen vorhandenen Fluidabfuhrkanal aufweist.

20. Vorrichtung nach einem der vorangehenden Ansprüche, **dadurch gekennzeichnet, daß** die Vorrichtung (1) mindestens zwei in separaten Fluidteilkanälen (6 a, 6 b) angeordnete Bolzen (9) aufweist, daß in den Kanälen (6 a, 6 b, 12, 12 a, 5, 5 a bis 5 f) stromauf der Bolzen (9) mindestens zwei Sperrelemente (30) vorgesehen sind, die derart angeordnet und ausgebildet sind, daß jedes Sperrelement (30) zwischen einer ersten Stellung, in der Fluidstrom zum Filter (11) nicht behindert ist, und einer zweiten Stellung, in der der Fluidstrom zum Filter (11) hin unterbrochen ist, bewegbar ist und daß zwischen dem Sperrelement (30) und dem diesem zugeordneten Filter (11) ein Ablaßelement (31, 31 a bis 31 e) vorgesehen ist, das im geöffneten Zustand einen Fluidteilstrom zur Atmosphäre hin abführt.

21. Vorrichtung nach Anspruch 20, **dadurch gekennzeichnet, daß** das Sperrelement (30) das Ablaßelement ausbildet, derart, daß in einer dritten Stellung des Sperrelementes (30) der Fluidstrom zum Filter (11) hin unterbrochen ist, jedoch ein Rückstrom des Fluids vom Filter zum Sperrelement und über das Sperrelement zur Atmosphäre hin eröffnet ist.

22. Vorrichtung nach Anspruch 20 und 21, **dadurch gekennzeichnet, daß** der Bolzen (9) das Sperrelement und/oder das Ablaßelement ausbildet.

23. Vorrichtung nach Anspruch 20 oder 21, **dadurch gekennzeichnet, daß** jedem Fluidteilkanal (6, 6 a, 6 b) stromauf des Filters (11) das Ablaßelement (31, 31 a bis 31 e) zugeordnet ist.

24. Vorrichtung nach Anspruch 20 oder 21, **dadurch gekennzeichnet, daß** einer Gruppe von Filtern (11) jeweils ein gemeinsames Sperrelement (30) und/oder ein gemeinsames Ablaßelement (31, 31 a bis 31 e) zugeordnet ist.

25. Vorrichtung nach Anspruch 20 bis 22, **dadurch gekennzeichnet, daß** das Verteilungsmodul mindestens zwei Verteilungskanäle (5 a, 5 b) aufweist und daß jedem Verteilungskanal (5 a, 5 b) ein Sperrelement (30) zugeordnet ist.

26. Vorrichtung nach Anspruch 20 bis 22, **dadurch gekennzeichnet, daß** jedem Fluidteilkanal (6 a, 6 b) das Sperrelement und/oder das Ablaßelement (31, 31 a bis 31 e) zugeordnet ist.

27. Vorrichtung nach einem der vorangehenden Ansprüche, **dadurch gekennzeichnet, daß** jeder Bolzen (9) mindestens zwei, mit axialem Abstand voneinander angeordnete Filter (11) haltert.

28. Filtermodul zur Verwendung in einer Vorrichtung nach einem der vorangehenden Ansprüche, **dadurch gekennzeichnet, daß** das Filtermodul (3, 3 A bis 3 F, 3 ' bis 3''''') eine erste und eine zweite Dichtfläche (15, 16, 16 a, 16 b) zur fluiddichten und lösbaren Anbringung eines weiteren Filtermoduls, eines Verteilungsmoduls (2) oder eines Endmoduls (4) aufweist, daß das Filtermodul (3, 3 A bis 3 F, 3 ' bis 3''''') mit mindestens einem Fluidteilkanal (6, 6 a, 6 b) zur Aufnahme von mindestens einem von einem axial verschiebbaren Bolzen (9) gehalterten Filter (11) versehen ist, und daß das Filtermodul (3, 3 A bis 3 F, 3 ' bis 3''''') einen ersten Verbindungskanal (12) zur Zuführung eines nicht filtrierten Fluids und einen zweiten Verbindungskanal (13) zur Abführung des filtrierten Fluids besitzt.

29. Filtermodul nach Anspruch 28, **dadurch gekennzeichnet, daß** die erste und zweite Dichtfläche (15, 16, 16 a, 16 b) parallel zueinander ausgerichtet und entgegengesetzt angeordnet sind.

30. Filtermodul nach einem der Ansprüche 28 oder 29, **dadurch gekennzeichnet, daß** der erste Verbindungskanal (12) und/oder der zweite Verbindungskanal (13) senkrecht zur Dichtfläche (15, 16, 16 a, 16 b) ausgerichtet sind.

31. Filtermodul nach einem der Ansprüche 28 bis 30, **dadurch gekennzeichnet, daß** das Filtermodul zwei Fluidteilkanäle (6 a, 6 b) aufweist.

32. Filtermodul nach Anspruch 31, **dadurch gekennzeichnet, daß** die Fluidteilkanäle (6 a, 6 b) unter einem Neigungswinkel α zwischen 30° und 65° relativ zu den Verbindungskanälen (12, 13) ausgerichtet sind.

33. Filtermodul nach Anspruch 32, **dadurch gekennzeichnet, daß** das Filtermodul zwei Fluidteilkanäle (6 a, 6 b) aufweist, daß in dem Filtermodul zwei erste Verbindungskanäle (12) vorgesehen sind und daß das Filtermodul zwei zweite Verbindungskanäle (13) oder einen gemeinsamen zweiten Verbindungskanal (13) umfaßt.

## Claims

1. A device (1) for the filtering of a fluid stream, particularly for the filtering of a molten plastic, with at least one fluid supply duct or a first connection area (18) for connecting with an existing fluid supply duct and at least one fluid removal duct or a second connection area (21) for connecting with an existing fluid removal duct, whereby the fluid supply duct, respectively the first connection area (18), is connected with the fluid removal duct, respectively with the second connection area (21), by means of at least one partial fluid duct, and whereby the partial fluid duct (6, 6 a, 6 b) contains at least one filter (11) being essentially arranged vertically to the flow direction of the fluid to be filtered, whereby the filter (11) is fixed by means of an axially shiftable bolt (9) being arranged vertically to the partial fluid duct (6, 6 a, 6 b), **characterised in that** the device (1) has a modular construction in which relatively to the flow direction (19) of the fluid to be filtered a distribution module (2), at least one filter module (3, 3 A to F, 3' to 3''''') comprising the partial fluid duct (6, 6 a, 6 b), and a final module (4) are detachably connected with each other, that the distribution module (2) comprises at least one distribution duct (5, 5 a to 5 f) which connects the fluid supply duct, respectively the first connection area (18), with the partial fluid duct (6, 6 a, 6 b), and that the final module (4) comprises at least one outlet duct (7, 7 a to 7 f), whereby the outlet duct (7, 7 a to 7 f) extends between the partial fluid duct (6, 6 a, 6 b) and the fluid removal duct, respectively the second connection area (21).

2. The device according to claim 1, **characterised in that** the device (1) comprises a multitude of filter modules (3, 3 A to 3 F, 3' to 3'''''), particularly two to ten filter modules (3, 3 A to 3 F, 3' to 3'''''), being arranged next to each other and/or above each other, that the distribution module (2) comprises a number of distribution ducts (5, 5 a to 5 f) which corresponds to the number of the filter modules (3, 3 A to 3 F, 3' to 3'''''), and that the final module (4) comprises a number of outlet ducts (7, 7 a to 7f) which corresponds to the number of filter modules (3, 3 A to 3 F, 3' to 3''''').

3. The device according to claim 1, **characterised in that** the device (1) comprises a multitude of filter modules (3, 3 A to 3 F, 3' to 3'''''), particularly two to ten filter modules (3, 3 A to 3 F, 3' to 3'''''), being arranged one behind the other relatively to the flow direction (19) of the fluid to be filtered, that the distribution module (2) comprises a single distribution duct (5), and that the final module (4) comprises a single outlet duct (7), that, with the exception of the filter module which is located immediately at the distribution module (2) and immediately at the final module (4), each further filter module (3, 3 A to 3 F, 3' to 3''''') comprises a first connection duct (12) upstream of the filter (11) and a second connection duct (13) downstream of the filter (11), that the filter module being located immediately at the distribution module (2) only comprises the first connection duct (12) and that the filter module being located immediately at the final module (4) only comprises the second connection duct (13), whereby the first and the second connection ducts (12, 13) are arranged **in that** way that the first connection duct (12) of each filter module upstream of the filter (11) generates a fluid connection between the distribution duct (5) and the partial fluid duct (6), and whereby the second connection duct (13) downstream of the filter (11) generates a fluid connection between the partial fluid duct (6) and the outlet duct (7) of the final module (4).

4. The device according to claim 3, **characterised in that** the first connection ducts (12) and/or the second connection ducts (13) of adjacent filter modules (3, 3 A to 3 F, 3' to 3''''') are connected with each other in a fluid-tight manner by means of sealing surfaces (16, 16 a) contacting each other.

5. The device according to claim 3 or 4, **characterised in that** the first connection duct (12) is arranged parallely to the second connection duct (13).

6. The device according to one of the preceding claims, **characterised in that** the connection module (2) and the final module (4) comprise each a sealing surface (14, 17) for the fluid-tight connection with a filter module (3, 3 A to 3 F, 3' to 3''''').

7. The device according to one of the preceding claims, **characterised in that** each filter module (3, 3 A to 3 F, 3' to 3''''') comprises a first sealing surface (15, 16 a) and a second sealing surface (16, 16 b) which is arranged oppositely to the first sealing surface (15, 16 a), and that each of the two filter modules are detachably connected with each other by means of sealing surfaces being assigned to each other or that one filter module is detachably connected in a fluid-tight manner with the sealing surface (17) being located at the distribution module (2) by means of the first sealing surface (16) and with the sealing surface (14) being located at the final module (4) by means of the second sealing surface (15).

8. The device according to claim 7, **characterised in that** the first sealing surface and the second sealing surface are mainly arranged parallely to each other.

9. The device according to claim 7 or 8, **characterised in that** the partial fluid duct (6, 6 a, 6 b) is formed in an inclined manner relative to the sealing surface (15, 16, 16 a, 16 b) in an angle α between 30° and 65°.

10. The device according to one of the claims 3 to 9, **characterised in that** the first connection duct (12) and the second connection duct (13) extend mainly vertically to the sealing surface (15, 16, 16 a, 16 b).

11. The device according to one of the preceding claims, **characterised in that** the device (1) comprises a multitude of filter modules (3, 3 A to 3 F, 3' to 3''''') and that the partial fluid ducts (6, 6 a, 6b) are arranged parallely to each other.

12. The device according to one of the preceding claims, **characterised in that** the single filter modules (3, 3 A to 3 F, 3' to 3''''') have the same construction.

13. The device according to one of the preceding claims, **characterised in that** the distribution modules (2) comprises the first connection area (18) for connecting with an existing fluid supply duct and/or that the final module (4) comprises the second connection area (21) for connecting with an existing fluid removal duct.

14. The device according to one of the preceding claims, **characterised in that** each filter module (3, 3 A to 3 F, 3' to 3''''') comprises a single partial fluid duct with a single bolt (9) being axially shiftable.

15. The device according to one of the claims 1 to 13, **characterised in that** each filter module (3, 3 A, 3 B, 3 C, 3' to 3'') comprises two partial fluid ducts (6 a, 6 b), whereby each partial fluid duct (6 a, 6 b) is provided with one axially shiftable bolt (9).

16. The device according to claim 15, **characterised in that** the two partial fluid ducts (6 a, 6 b) of each filter module (3, 3 A, 3 B, 3 C, 3' to 3 '') abut downstream of the bolt (9) into a common second connection duct (13), whereas a first connection duct (12) is correspondingly connected upstream of the bolt (9) with a partial fluid duct (6 a, 6 b).

17. The device according to claim 16, **characterised in that** the common second connection duct (13) is arranged parallely to the two first connection ducts (12).

18. The device according to one of the preceding claims, **characterised in that** the final module (4) is also formed as filter module.

19. The device according to claim 18, **characterised in that** the outlet duct (7) of the final module (4) forms the second connection duct (13) which comprises the second connection area (21) for connecting with an existing fluid removal duct at its endside relatively to the flow direction (19) of the fluid to be filtered.

20. The device according to one of the preceding claims, **characterised in that** the device (1) comprises at least two bolts (9) being arranged in separate partial fluid ducts (6 a, 6 b), that at least two blocking elements (30) are provided in the ducts (6 a, 6 b, 12, 12 a, 5, 5 a to 5 f) upstream of the bolts (9), whereby these blocking elements (30) are arranged and formed **in that** way that each blocking element (30) can be moved between a first position in which the fluid stream to the filter (11) is not blocked and a second position in which the fluid stream to the filter (11) is interrupted, and that an outlet element (31, 31 a to 31 e) is located between the blocking element (30) and the corresponding filter (11), whereby in its opened position the outlet element (31, 31 a to 31 e) leads a partial fluid stream into the atmosphere.

21. The device according to claim 20, **characterised in that** the blocking element (30) forms the outlet element in such a way that in a third position of the blocking element (30) the fluid stream to the filter (11) is interrupted, whereby, however, a reverse stream of the fluid from the filter to the blocking element and into the atmosphere by means of the blocking element is possible.

22. The device according to the claims 20 and 21, **characterised in that** the bolt (9) forms the blocking element (30) and/or the outlet element.

23. The device according to claim 20 or 21, **characterised in that** each partial fluid duct (6, 6 a, 6 b) comprises the outlet element (31, 31 a to 31 e) upstream of the filter (11).

24. The device according to claim 20 or 21, **characterised in that** each group of filters (11) contains one common blocking element (30) and/or one common outlet element (31, 31 a to 31 e).

25. The device according to the claims 20 to 22, **characterised in that** the distribution module comprises at least two distribution ducts (5 a, 5 b) and that each distribution duct (5 a, 5 b) contains a blocking element (30).

26. The device according to the claims 20 to 22, **characterised in that** each partial fluid duct (6 a, 6 b) comprises the blocking element (30) and/or the outlet element (31, 31 a to 31 e).

27. The device according to one of the preceding claims, **characterised in that** each bolt (9) supports at least two filters (11) being located to each other in an axial distance.

28. The filter module for the use in a device according to one of the preceding claims, **characterised in that** the filter module (3, 3 A to 3 F, 3' to 3''''') comprises a first and a second sealing surface (15, 16, 16 a, 16 b) for the fluid-tight and detachable fixing of a further filter module, of a distribution module (2) or of a final module (4), that the filter module (3, 3 A to 3 F, 3' to 3''''') is provided with at least one partial fluid duct (6, 6 a, 6 b) for taking up at least one filter (11) supported by means of an axially shiftable bolt (9), and that the filter module (3, 3 A to 3 F, 3' to 3''''') contains a first connection duct (12) for supplying a non-filtered fluid and a second connection duct (13) for draining off the filtered fluid.

29. The filter module according to claim 28, **characterised in that** the first and second sealing surface (15, 16, 16 a, 16 b) are aligned parallely to each other and arranged oppositely.

30. The filter module according to one of the claims 28 or 29, **characterised in that** the first connection duct (12) and/or the second connection duct (13) are arranged vertically to the sealing surface (15, 16, 16 a, 16 b).

31. The filter module according to one of the claims 28 to 30, **characterised in that** the filter module comprises two partial fluid ducts (6 a, 6 b).

32. The filter module according to claim 31, **characterised in that** the partial fluid ducts (6 a, 6 b) are arranged in an inclination angle α of between 30° and 65° relatively to the connection ducts (12, 13).

33. The filter module according to claim 32, **characterised in that** the filter module comprises two partial fluid ducts (6 a, 6 b), that two first connection ducts (12) are located in the filter module and that the filter module comprises two second connection ducts (13) or one common second connection duct (13).

## Revendications

1. Dispositif (1) pour la filtration d'un écoulement de fluide, en particulier pour la filtration de matière synthétique fondue, qui comporte au moins un canal d'amenée de fluide ou une première zone de liaison (18) destinée à assurer la liaison avec un canal existant d'amenée de fluide et au moins un canal d'évacuation de fluide ou une deuxième zone de liaison (21) destinée à assurer le raccordement avec un canal existant d'évacuation de fluide, le canal d'amenée de fluide ou la première zone de liaison (18) étant reliés au canal d'évacuation de fluide ou à la deuxième zone de liaison (21) par au moins un canal de répartition de fluide, le canal (6, 6a, 6b) de répartition de fluide présentant au moins un filtre (11) orienté essentiellement à la perpendiculaire de la direction d'écoulement du fluide à filtrer, porté par un goujon (9) orienté perpendiculairement au canal (6, 6a, 6b) de répartition de fluide et apte à coulisser axialement, **caractérisé en ce que** le dispositif (1) présente une structure modulaire dans laquelle, dans la direction d'écoulement (19) du fluide à filtrer, un module de répartition (2), au moins un module de filtration (3, 3A à 3F, 3' à 3""') doté du canal (6, 6a, 6b) de répartition de fluide et un module d'extrémité (4) sont reliés les uns aux autres de manière libérable, **en ce que** le module de répartition (2) présente au moins un canal de répartition (5, 5a à 5f) qui relie le canal d'amenée de fluide ou la première zone de liaison (18) au canal (6, 6a, 6b) de répartition de fluide et **en ce que** le module d'extrémité (4) est doté d'au moins un canal d'évacuation (7, 7a à 7f), le canal d'évacuation (7, 7a à 7f) s'étendant entre le canal (6, 6a, 6b) de répartition de fluide et le canal d'évacuation de fluide ou la deuxième zone de liaison (21).

2. Dispositif selon la revendication 1, **caractérisé en ce que** le dispositif (1) présente une pluralité de modules de filtration (3, 3A à 3F, 3' à 3""') disposés les uns à côté des autres et/ou les uns au-dessus des autres, et en particulier de deux à dix modules de filtration (3, 3A à 3F, 3' à 3""'), **en ce que** le module de répartition (2) présente un nombre de canaux de répartition (5, 5a à 5f) qui correspond au nombre des modules de filtration (3, 3A à 3F, 3' à 3""') et **en ce que** le module d'extrémité (4) présente un nombre de canaux d'évacuation (7, 7a à 7f) qui correspond au nombre des modules de filtration (3, 3A à 3F, 3' à 3""').

3. Dispositif selon la revendication 1, **caractérisé en ce que** le dispositif (1) présente une pluralité de modules de filtration (3, 3A à 3F, 3' à 3'''''), et en particulier deux à dix modules de filtration (3, 3A à 3F, 3' à 3''''') disposés les uns derrière les autres par rapport au fluide à filtrer, **en ce que** le module de répartition (2) présente un unique canal de répartition (5), **en ce que** le module d'extrémité présente un unique canal d'évacuation, **en ce qu'**à l'exception du module de filtration disposé directement sur le canal de répartition (2) et du module de filtration disposé directement sur le module d'extrémité (4), chacun des autres modules de filtration (3, 3A à 3F, 3' à 3''''') présente en amont du filtre (11) un premier canal de liaison (12) et en aval du filtre (11) un deuxième canal de liaison (13), **en ce que** le module de filtration directement adjacent au module de répartition (2) présente uniquement le premier canal de liaison (12), le module de filtration directement adjacent au module d'extrémité (4) présentant uniquement le deuxième canal de liaison (13), le premier et le deuxième canal de liaison (12, 13) étant disposés de telle sorte que le premier canal de liaison (12) de chaque module de filtration établit en amont du filtre (11) une liaison d'écoulement entre le canal de répartition (5) et le canal (6) de répartition de fluide et **en ce qu'**en aval du filtre (11), le deuxième canal de liaison (13) établit une liaison d'écoulement entre le canal (6) de répartition de fluide et le canal d'évacuation (7) du module d'extrémité (4).

4. Dispositif selon la revendication 3, **caractérisé en ce que** les premiers canaux de liaison (12) et/ou les deuxièmes canaux de liaison (13) de modules de filtration voisins (3, 3A à 3F, 3' à 3''''') sont reliés les uns aux autres de manière étanche au fluide par des surfaces d'étanchéité (16, 16a) mutuellement adjacentes.

5. Dispositif selon les revendications 3 ou 4, **caractérisé en ce que** le premier canal de liaison (12) est orienté parallèlement au deuxième canal de liaison (13).

6. Dispositif selon l'une des revendications précédentes, **caractérisé en ce que** le module de liaison (2) et le module d'extrémité (4) présentent tous deux une surface d'étanchéité (14, 17) pour établir une liaison étanche au fluide avec un module de filtration (3, 3A à 3F, 3' à 3''''').

7. Dispositif selon l'une des revendications précédentes, **caractérisé en ce que** chaque module de filtration (3, 3A à 3F, 3' à 3''''') présente une première surface d'étanchéité (15, 16a) et une deuxième surface d'étanchéité (16, 16b) disposée face à la première et **en ce que** deux modules de filtration peuvent être reliés l'un à l'autre de manière libérable par des surfaces d'étanchéité associées l'une à l'autre ou **en ce qu'**un module de filtration est relié de manière étanche au fluide et libérable par la première surface d'étanchéité (16) à la surface d'étanchéité (17) prévue sur le module de répartition (2) et par la deuxième surface d'étanchéité (15) à la surface d'étanchéité (14) prévue sur le module d'extrémité (4).

8. Dispositif selon la revendication 7, **caractérisé en ce que** la première surface d'étanchéité et la deuxième surface d'étanchéité sont orientées essentiellement en parallèle l'une à l'autre.

9. Dispositif selon les revendications 7 ou 8, **caractérisé en ce que** le canal (6, 6a, 6b) de répartition de fluide est configuré de manière à être incliné sous un angle α compris entre 30° et 65° par rapport à la surface d'étanchéité (15, 16, 16a, 16b).

10. Dispositif selon l'une des revendications 3 à 9, **caractérisé en ce que** le premier canal de liaison (12) et le deuxième canal de liaison (13) s'étendent essentiellement à la perpendiculaire de la surface d'étanchéité (15, 16, 16a, 16b).

11. Dispositif selon l'une des revendications précédentes, **caractérisé en ce que** le dispositif (1) présente une pluralité de modules de filtration (3, 3A à 3F, 3' à 3''''') et **en ce que** les canaux (6, 6a, 6b) de répartition de fluide sont orientés parallèlement les uns aux autres.

12. Dispositif selon l'une des revendications précédentes, **caractérisé en ce que** les modules individuels de filtration (3, 3A à 3F, 3' à 3''''') présentent la même structure.

13. Dispositif selon l'une des revendications précédentes, **caractérisé en ce que** le module de répartition (2) présente la première zone de liaison (18) qui réalise le raccord à un canal existant d'amenée de fluide et/ou **en ce que** le module d'extrémité (4) présente la deuxième zone de liaison (21) qui réalise le raccordement à un canal existant d'évacuation de fluide.

14. Dispositif selon l'une des revendications précédentes, **caractérisé en ce que** chaque module de filtration (3, 3A à 3F, 3' à 3""') présente un seul canal de répartition de fluide doté d'un unique goujon (9) apte à coulisser axialement.

15. Dispositif selon l'une des revendications 1 à 13, **caractérisé en ce que** chaque module de filtration (3, 3A, 3b, 3c, 3' à 3") présente deux canaux de répartition de fluide (6a, 6b), chaque canal de répartition de fluide (6a, 6b) étant doté d'un goujon (9) apte à coulisser axialement.

16. Dispositif selon la revendication 15, **caractérisé en ce que** les deux canaux de répartition de fluide (6a, 6b) de chaque module de filtration (3, 3A, 3b, 3c, 3' à 3") débouchent en aval du goujon (9) dans un deuxième canal de liaison (13) commun, chaque premier canal de liaison (12) étant raccordé à un canal (6a, 6b) de répartition de fluide respectif en amont du goujon (9).

17. Dispositif selon la revendication 16, **caractérisé en ce que** le deuxième canal de liaison (13) commun est orienté parallèlement aux deux premiers canaux de liaison (12).

18. Dispositif selon l'une des revendications précédentes, **caractérisé en ce que** le module d'extrémité (4) est également configuré comme module de filtration.

19. Dispositif selon la revendication 18, **caractérisé en ce que** le canal d'évacuation (7) du module d'extrémité (4) forme le deuxième canal de liaison (13) qui présente du côté de son extrémité dans la direction d'écoulement (19) du fluide filtré la deuxième zone de liaison (21) destinée à être raccordée à un canal existant d'évacuation de fluide.

20. Dispositif selon l'une des revendications précédentes, **caractérisé en ce que** le dispositif (1) présente au moins deux goujons (9) disposés dans des canaux séparés de répartition de fluide (6a, 6b), **en ce qu'**au moins deux éléments de blocage (30) sont prévus dans les canaux (6a, 6b, 12, 12a, 5, 5a à 5f) en amont du goujon (9) et sont disposés et configurés de telle sorte que chaque élément de blocage (30) peut être déplacé entre une première position dans laquelle il n'empêche pas l'écoulement de fluide vers le filtre (11) et une deuxième position dans laquelle il interrompt l'écoulement de fluide vers le filtre (11) et **en ce qu'**entre l'élément de blocage (30) et le filtre (11) qui lui est associé est prévu un élément d'évacuation (31, 31a à 31e) qui, lorsqu'il est en position ouverte, évacue vers l'atmosphère un écoulement partiel de fluide.

21. Dispositif selon la revendication 20, **caractérisé en ce que** l'élément de blocage (30) forme l'élément d'évacuation de telle sorte que lorsque l'élément de blocage (30) se trouve dans une troisième position, l'écoulement de fluide vers le filtre (11) est interrompu mais un retour du fluide depuis le filtre jusqu'à l'élément de blocage et par l'élément de blocage à l'atmosphère est ouvert.

22. Dispositif selon les revendications 20 et 21, **caractérisé en ce que** le goujon (9) forme l'élément de blocage et/ou l'élément d'évacuation.

23. Dispositif selon les revendications 20 ou 21, **caractérisé en ce que** chaque canal de répartition de fluide (6, 6a, 6b) est associé à l'élément d'évacuation (31, 31a à 31e) en amont du filtre (11).

24. Dispositif selon les revendications 20 ou 21, **caractérisé en ce qu'**un élément de blocage (30) commun et/ou un élément d'évacuation (31, 31a à 31e) commun sont associés à chaque groupe de filtres (11).

25. Dispositif selon les revendications 20 à 22, **caractérisé en ce que** le module de répartition présente au moins deux canaux de répartition (5a, 5b) et **en ce qu'**un élément de blocage (30) est associé à chaque canal de répartition (5a, 5b).

26. Dispositif selon les revendications 20 à 22, **caractérisé en ce que** l'élément de blocage et/ou l'élément d'évacuation (31, 31a à 31e) sont associés à chaque canal de répartition de fluide (6a, 6b).

27. Dispositif selon l'une des revendications précédentes, **caractérisé en ce que** chaque goujon (9) retient au moins deux filtres (11) disposés à distance axiale mutuelle.

28. Module de filtration destiné à être utilisé dans un dispositif selon l'une des revendications précédentes, **caractérisé en ce que** le module de filtration (3, 3A à 3F, 3' à 3""') présente une première et une deuxième surface d'étanchéité (15, 16, 16a, 16b) pour assurer l'installation étanche au fluide et libérable d'un deuxième module de filtration, d'un module de répartition (2) ou d'un module d'extrémité (4), **en ce que** le module de filtration (3, 3A à 3F, 3' à 3''''') est doté d'au moins un canal de répartition de fluide (6, 6a, 6b) qui reçoit au moins un filtre (11) maintenu par un goujon (9) apte à coulisser axialement et **en ce que** le module de filtration (3, 3A à 3F, 3' à 3''''') présente un premier canal de liaison (12) pour l'amenée d'un fluide non filtré et un deuxième canal (13) pour l'évacuation du fluide filtré.

29. Module de filtration selon la revendication 28, **caractérisé en ce que** la première et la deuxième surface d'étanchéité (15, 16, 16a, 16b) sont disposées dans une orientation mutuellement parallèle et dans des sens opposés.

30. Module de filtration selon l'une des revendications 28 ou 29, **caractérisé en ce que** le premier canal de liaison (12) et/ou le deuxième canal de liaison (13) sont orientés perpendiculairement à la surface d'étanchéité (15, 16, 16a, 16b).

31. Module de filtration selon l'une des revendications 28 à 30, **caractérisé en ce que** le module de filtration présente deux canaux (6, 6a, 6b) de répartition de fluide.

32. Module de filtration selon la revendication 31, **caractérisé en ce que** les canaux (6a, 6b) de répartition de fluide sont orientés par rapport au canal de liaison (12, 13) sous un angle d'inclinaison α compris entre 30° et 65°.

33. Module de filtration selon la revendication 32, **caractérisé en ce que** le module de filtration présente deux canaux (6a, 6b) de répartition de fluide, **en ce que** deux premiers canaux de liaison (12) sont prévus dans le module de filtration et **en ce que** le module de filtration comprend deux deuxièmes canaux de liaison (13) ou un deuxième canal de liaison (13) commun.
